# EUROPÄISCHE PATENTANMELDUNG

(11) **EP 4 656 801 A2**
(43) Veröffentlichungstag der Anmeldung: **03.12.2025**
(21) Anmeldenummer: 25208629.3
(22) Anmeldetag: 20.07.2021
(51) Int. Cl.: E01C 19/10

(54) **DISAGGREGIERUNG VON BITUMENHALTIGEM STRASSENBELAGSMATERIAL**

(30) Priorität: 20.07.2020 CH 8962020; 15.02.2021 CH 1452021
(62) Teilanmeldung aus: 21746732.3
(71) Anmelder: Newroad AG, 3018 Bern (CH)
(72) Erfinder: ROSSIER, Joël, 1895 Vionnaz (CH)
(74) Vertreter: Keller Schneider Patent- und Markenanwälte AG

(57) **Zusammenfassung**

In einem Verfahren zum Aufbereiten von bitumenhaltigem Strassenbelagsmaterial aus einem Strassenabbruch, wobei das bitumenhaltige Strassenbelagsmaterial in der Form von Abbruchmaterial und/oder Fräsgut vorliegt, werden die folgenden Schritte ausgeführt: Vermengen des bitumenhaltigen Strassenbelagsmaterial mit Wasser zu einem Gemisch; Zugeben eines Peroxids und/oder eines Bicarbonats zum Wasser und/oder dem Gemisch, insbesondere Wasserstoffperoxid und/oder ein Bicarbonat.

## Beschreibung

### Technisches Gebiet

Die Erfindung betrifft Verfahren zum Aufbereiten von bitumenhaltigem Strassenbelagsmaterial aus einem Strassenabbruch, wobei das bitumenhaltige Strassenbelagsmaterial in der Form von Abbruchmaterial und/oder Fräsgut vorliegt.

### Stand der Technik

Seit mehr als einem Jahrhundert werden Strassen mit einem bitumenhaltigen Strassenbelag bedeckt. Der bitumenhaltige Strassenbelag setzt sich typischerweise aus einer obersten Deckschicht, welche die Fahrbahnoberfläche bildet, einer Binderschicht, einer Tragschicht und einer Fundationsschicht zusammen. Die unteren Schichten, insbesondere die Fundationsschicht, müssen nicht zwingend bituminöses Material umfassen. Der bitumenhaltige Strassenbelag umfasst unter anderem bituminöses Material, Splitt, Sand, Filler respektive Bindemittel.

Bitumen ist ein Nebenprodukt der Erdöldestillation. Es ist davon auszugehen, dass bei einer Verringerung der Nachfrage nach Treibstoffen aufgrund der boomenden alternativen Antriebe (Elektro, Wasserstoff etc.) auch eine Produktion des Bitumens zurückgeht. Somit werden auch neben den wirtschaftlichen und ökologischen Aspekten Methoden zum Wiedergewinnen des bituminösen Materials in Zukunft an Relevanz gewinnen.

Strassenbitumen, Dachpappe und ähnliche Baustoffe, welche auf Bitumen basieren, werden aus Rückständen des Rohöls nach atmosphärischer Destillation und/oder Kracken hergestellt.

Die Strassenbitumen werden normiert und werden nach ihren Eigenschaften (z. B. der Nadelpenetration o. ä.) eingeordnet. Aufgrund dieser Eigenschaften kann bei unterschiedlichen klimatischen Bedingungen ein idealer Baustoff ausgewählt werden. Um den Strassenbelag herzustellen, wird das Strassenbitumen auf 120 bis 230 °C aufgeheizt und mit einem Anteil von 5 bis 7 gew. % den Granulaten, Sand, insbesondere Brechsand, Splitter und Filler beigemengt. Granulate, Sand und Filler werden auf 150 bis 400 °C vorgeheizt, um Restwasser auszutreiben. Die Masse wird danach gewalzt und bildet so einen sehr widerstandsfähigen Belag, welcher praktisch kein Wasser enthält. Diese Beläge sind somit wasserunlöslich und sehr widerstandsfähig. Die Parameter der Herstellung sowie die Zusammensetzung der Asphaltbeläge können dabei variieren.

Mit der Zeit nutzt sich die Deckschicht ab, die Granulate an der Oberfläche werden durch die Abnutzung abgerundet oder sogar abgeflacht, womit die Deckschicht rutschig wird. Zudem bilden sich mit der Zeit Spurrinnen. In diesem Fall muss die Strasse saniert werden, indem einige Zentimeter Schichtdicke der Deckschicht durch Fräsen entfernt werden, um anschliessend eine neue Deckschicht aufzubringen. Sofern die Strassen vollständig saniert werden muss, wird der gesamte Belag herausgebrochen und anschliessend die Strasse neu aufgebaut.

Das beim Abbruch oder Fräsen von bitumenhaltigen Strassenbelägen anfallende Produkt liegt als bitumenhaltiges Konglomerat vor, welches typischerweise eine Korngrösse (Maschengrösse bei Siebanalyse) von mehr als 5 cm aufweisen. Beim Abbruchmaterial können die Bruchstücke Grössen im Bereich von mehreren Dezimetern und bis zu 20kg oder mehr wiegen.

Das direkte Recycling durch Beimengen eines Anteils des entfernten bitumenhaltigen Strassenbelagsmaterials zu dem neuen Oberbau ist nicht in jeder Anwendung möglich, insbesondere wenn höhere Anforderungen an die Qualität des Asphaltbelags gestellt werden. Gegebenenfalls kann durch Beimengen von Juvenatoren die Qualität des Strassenbelagsmaterials verbessert werden, so dass danach das Strassenbelagsmaterial wieder eingesetzt werden kann. Typischerweise verringern die Juvenatoren damit die Viskosität des Bitumens. Mit dem Penetrationstest kann die Zugabe von Juvenatoren gesteuert werden - je höher der Anteil an Juvenatoren desto höher ist der Penetrationswert (unter Penetrationswert wird das Ergebnis der Walkpenetration nach DIN ISO 2137; 2016-12 verstanden, welche die Einheit 0.10 mm hat). Solche Strassenbeläge weisen jedoch gegenüber den aus den Rohmaterialien (Bitumen und Gestein) hergestellten Strassenbelägen jeweils eine verminderte Qualität und Lebensdauer auf, insbesondere da das Gestein, welches einer Abnutzung unterliegt (siehe oben) nicht ersetzt wird.

Eine grosse Problematik beim Recycling von Strassenbelagsmaterial ist die starke Bindung des bituminösen Materials in sich und zum Gestein. Dies rührt daher, dass das Strassenbelagsmaterial durch die Wahl des Gesteins, des Bitumens und den Einsatz einer Vielzahl an Zuschlagstoffen so robust als möglich hergestellt wird - das Ziel bei der Herstellung von Strassenbelägen ist schliesslich eine möglichst lange Lebensdauer. Mit der gezielten Auswahl der Ausgangsstoffe und der Zuschlagstoffe wird eine maximale Adhäsion zwischen dem Bitumen und dem Gestein geschaffen. Damit wird zwar einerseits ein hoch belastbarer Strassenbelag geschaffen, anderseits wird aber auch das Trennen des bituminösen Materials von dem Gestein maximal erschwert.

Beispielhaft wird dies durch die "Bestimmung des Haftvermögens von bituminösen Bindemitteln an Mineralstoffen" nach SN 670 460 (schweizer Norm, Stand des Jahres 2012) respektive EN 12697-11 (europäische Norm) aufgezeigt. Hierbei wird Gestein mit einem Durchmesser von 8/11 mm mit Bitumen versetzt und anschliessend wären 24h in Wasser getaucht. Anschliessend wird der Bedeckungsgrad des Gesteins bestimmt. Typische Resultate zeigen, dass bei unbehandeltem Bitumen ein Umhüllungsgrad von rund 65% erreicht werden kann, während bei der Zugabe von Bindemittel ein sehr viel höherer Umhüllungsgrad erreicht werden kann, insbesondere von über 85%. Somit wird durch die Zugabe von Bindemittel eine signifikant höhere Bindung zwischen dem Bitumen und dem Gestein erreicht, als dies zum Beispiel bei natürlich vorkommenden Bitumen möglich ist.

Es sind aber nicht nur diese Faktoren, welche das Trennen von bituminösem Material vom Gestein im bitumenhaltigen Strassenbelagsmaterial erschweren. Weitere Faktoren sind durch den Produktionsprozess und den Alterungsprozess des Strassenbelagsmaterial bedingt.

Die Gründe dazu wurden durch diverse Studien untersucht. Eine dieser Studien wurde von Fahd Ben Salem unter dem Titel "Evaluation de l'effet d'ajout du régénérant sur le bitume vielli et sur les enrobés recyclés à froid" durchgeführt (École de Technologie supérieure Université du Québec; Montréal, le 2 Mars 2017). Demnach ist die Bitumenalterung eines der grössten Probleme beim Asphalt-Recycling. Die Alterung führt zu einer Veränderung der chemischen Struktur des Bitumens und zu einer höheren Viskosität sowie zu einer höheren Steifigkeit.

Im Herstellungsprozess wird das bitumenhaltigen Strassenbelagsmaterial hohen Temperaturen, typischerweise von mehr als 150°C ausgesetzt. Damit werden einerseits leichtflüchtige Bestandteile verdampft und anderseits wird das Bitumen oxidiert. Die hohe Temperatur hat dabei einen erheblichen Einfluss, da bei einer Temperaturerhöhung um 10 - 12C° eine Verflüchtigung der Fraktionen mit geringerer Molmasse verdoppeln kann. Damit erfolgt der Alterungsprozess bereits in einem erheblichen Masse während der Herstellung des Strassenbelags. Das Verdampfen der leichtflüchtigen Bestandteile (VOC) ist nicht zu vernachlässigen und kann während des Herstellungsverfahrens im Bitumen einen Massenschwund von einigen Prozent bewirken. Der Penetrationswert sinkt damit bereits während der Herstellung des Strassenbelags erheblich, typischerweise von 60 - 100 auf rund 20 (10⁻¹ mm).

Bitumenhaltige Strassenbeläge sind weiter im Alterungsprozess über Jahrzehnte hinweg der Witterung, wie Sonne und damit insbesondere UV-Strahlung, Regen, Temperaturschwankungen und nicht zuletzt der Verkehrsbelastung ausgesetzt. Im Wesentlichen erfolgt eine Aushärtung des Strassenbelags durch die Verflüchtigung der leichten Fraktionen und die Oxidation (innere und durch Sonnenstrahlung verursachte).

Die oxidativen Alterung erfolgt durch die Diffusion von Luftsauerstoff durch das Gefüge des Asphalts, womit die viskoelastischen Eigenschaften des Bitumens geändert werden. Dies führt zu einer Erhöhung der Gesamtsteifigkeit des bitumenhaltigen Strassenbelagmaterial. Dieses Phänoment tritt bei allen Arten von bituminösem Material auf.

Weiter erschwerend ist die Tatsache, dass das bitumenhaltige Konglomerat nach dem Abbruch der Strasse respektive dem Fräsen der Strasse relativ grosse Bruchstücke umfasst. Diese müssen typischerweise einen aufwändigen Zerkleinerungsprozess durchlaufen, zum Beispiel einen Brecher. Dieser Vorgang ist einerseits sehr teuer und anderseits wird damit das Gestein zerkleinert und somit dessen Qualität vermindert. Weiter wird damit viel Staub erzeugt, welcher wiederum die Qualität des Bitumens beeinträchtigt.

Trotz der schwierigen Ausgangslage wurden Versuche unternommen, das bituminöse Material vom Gestein zu trennen. So ist zum Beispiel ein Verfahren bekannt, mit welchen das Bituminöse Material von dem Gestein getrennt wird, indem das Strassenbelagmaterial mit organischen Lösemittel versetzt und das bituminöse Material extrahiert wird. Dieses Verfahren hat den Nachteil, dass grosse Mengen an organischen Lösemittel eingesetzt werden müssen um es im industriellen Massstab umsetzen zu können. Solche Verfahren sind weiter aus ökologischen Gründen bedenklich.

Bislang wurde jedoch erfolglos nach einem effizienten Verfahren zum Aufbereiten von Strassenbelagsmaterial gesucht, welches ohne organische Lösemittel auskommt. Insbesondere aufgrund des geringen Anteils an VOC stellt dies an die Technik besondere Anforderungen, da durch das weitgehende Fehlen von leichtflüchtigen organischen Molekülen Lösevermittler fehlen, welche das Abtrennen des bituminösen Materials von dem Gestein unterstützen könnten. Aus diesen Gründen wird bislang bitumenhaltiges Strassenbelagsmaterial meistens aufwändig entsorgt.

### Darstellung der Erfindung

Aufgabe der Erfindung ist es, ein dem eingangs genannten technischen Gebiet zugehörendes Verfahren zu schaffen, womit bitumenhaltiges Strassenbelagsmaterial aus einem Strassenabbruch in der Form von Abbruchmaterial und/oder Fräsgut einfach und kosteneffizient aufbereitet werden kann.

Die Lösung der Aufgabe ist durch die Merkmale des Anspruchs 1 definiert. Demnach wird zur Aufbereitung von bitumenhaltigem Strassenbelagsmaterial aus einem Strassenabbruch in der Form von Abbruchmaterial und/oder Fräsgut mit Wasser zu einem Gemisch vermengt. Dem Wasser und/oder dem Gemisch werden ein Peroxid und/oder ein Bicarbonat, insbesondere Wasserstoffperoxid und/oder ein Bicarbonat zugegeben.

Es hat sich überraschend gezeigt, dass trotz der erschwerten Bedingungen aufgrund der hohen Viskosität respektive der geringen Penetrationswerte sowie der Zusätze von Bindemittel etc. mittels einer besonders einfachen und kosteneffizienten Variante die Konglomerate zersetzt werden können, ohne einen Brecher oder dergleichen einsetzten zu müssen. Durch den Einsatz des Peroxids und/oder des Bicarbonats, bevorzugt in warmem Wasser und unter Berührung, wird in überraschender Weise der Zusammenhalt der Konglomerate gelockert, womit eine Disaggregierung der Konglomerate erreicht wird. Damit ergeben sich im Verfahren zum Aufbereiten von bitumenhaltigem Strassenbelagsmaterial mehrere Vorteile:
1. Da auf einen Brecher oder ähnliches verzichtet werden kann, wir das Verfahren besonders kostengünstig.
2. Dadurch, dass das Disaggregieren im Wasser stattfindet, wird das Auftreten von schädlichen Stäuben und dergleichen vermieden.
3. Dadurch, dass das Disaggregieren im Wasser unter Zugabe eines Persoxids und/oder eines Bicarbonats stattfindet, wird ein energetisch besonders sparsames Verfahren geschaffen, welches insbesondere auch ökonomisch ist.
4. Dadurch, dass das Disaggregieren durch die Zugabe eines Persoxids und/oder eines Bicarbonats erfolgt, wird ein besonders schonendes Disaggregieren des Abbruchmaterials und/oder des Fräsguts erreicht. Damit wird insbesondere ein Mahlen/Zerkleinern des Kies verhindert, womit die Qualität des Kies während des Verfahrens zur Aufbereitung des bitumenhaltigen Strassenbelagsmaterial aufrecht erhalten werden kann.
5. Ein Trennverfahren zum Trennen des bituminösen Materials vom Splitt kann in demselben Verfahrensschritt erfolgen. Somit kann ein Trennverfahren, bei welchem das bituminöse Material von dem Splitt und, zumindest teilweise, vom Sand und Filler getrennt wird, in einem einzigen Reaktor durchgeführt werden. Damit ergibt sich ein besonders geringer Platzbedarf für das Verfahren zur Aufbereitung des bitumenhaltigen Strassenbelagsmaterial, sofern nach der Disaggregierung auch eine Trennung des bituminösen Materials vom Splitt erfolgen soll.

Zusammenfassend kann somit festgehalten werden, dass erfindungsgemäss ein Verfahren gefunden wurde, bei welchem Strassenbelagsmaterial aus einem Strassenabbruch ohne Zwischenverarbeitung mit Wasser vermengt und durch die Zugabe von Peroxids und/oder eines Bicarbonat disaggregiert werden kann. Das disaggregierte bitumenhaltige Strassenbelagsmaterial kann anschliessend entweder direkt einem neuen Strassenbelagsmaterial zugesetzt werden oder in einem weiteren Schritt vollständig

Das bitumenhaltige Strassenbelagsmaterial stammt aus dem Strassenabbruch. Somit umfasst es vorzugsweise Bitumen, welches als schwerste Fraktion bei der Erdölraffinerie anfällt. Allerdings, wie einleitend beschrieben, wird dem Bitumen während der Herstellung des Strassenbelagsmaterial einerseits Stoffe wie zum Beispiel Bindemittel etc. zugesetzt, um die Haftung an dem Kies zu verbessern. Weiter werden dem Bitumen auch Stoffe entzogen, insbesondere bei der Herstellung durch den Erhitzungsvorgang - dabei werden viele leichtflüchtige Stoffe (z.B. mit einem Verdampfungstemperatur von 150°C) entfernt. Aber auch im Einsatz als Strassenbelag - welcher je nach Belastung Jahrzehnte überdauert - werden weitere flüchtige Stoffe durch die Witterung entzogen (siehe oben). Somit handelst es sich beim Strassenbelagsmaterial aus dem Strassenabbruch um ein Sekundärrohstoff mit spezifischen Eigenschaften.

Anderseits unterscheiden sich bekanntermassen verschiedene Strassenbelagsmaterialien aufgrund des verwendeten Bitumens, der Zuschlagstoffe etc. Für das vorliegende Verfahren sind solche Variationen im Wesentlichen nicht relevant, das Verfahren funktioniert mit mindestens 90 % der bekannten bitumenhaltigen Strassenbeläge, insbesondere der bitumenhaltigen Strassenbeläge, welche Splitt, Sand und Filler umfassen.

Somit wird vorgängig zum Verfahren zur Aufbereitung von bitumenhaltigem Strassenbelagsmaterial, in einem ersten Schritt aus Bitumen, Splitt, Sand und Filler sowie typischerweise Bindemitteln ein Strassenbelagsmaterial hergestellt. Dieses wird in einem zweiten Schritt gewalzt um einen Strassenbelag zu bilden. Zu einem späteren Zeitpunkt (vorzugsweise nach mehr als 10 Jahren) wird das bitumenhaltige Strassenbelagsmaterial aus der Strasse abgebrochen. Das bitumenhaltige Strassenbelagsmaterial beinhaltet vorzugsweise die bitumenhaltigen Schichten des Oberbaus der Strasse, typischerweise die Deckschicht, die Binderschicht, die Tragschicht und gegebenenfalls die Fundationsschicht von asphaltierten Strassen. Bei der Strassensanierung wird der Strassenbelag entweder vollständig abgebrochen (Deckschicht zusammen mit einer oder mehreren Tragschichten) oder die Deckschicht (zumindest die Asphaltdeckschicht, gegebenenfalls zusätzlich die Binderschicht) wird abgefräst. Unter Strassenbelagsmaterial wird nachfolgend sowohl das Abbruchmaterial als auch das Fräsgut verstanden. In einem dritten Schritt, dem vorliegenden Verfahren zur Aufbereitung zugeführt, mit dem primären Ziel, die Konglomerate aus dem Abbruchmaterial und/oder dem Fräsgut zu disaggregieren. Ein sekundäres Ziel umfasst mindestens die Trennung des Bitumens von dem Splitt und vorzugsweise weiter vom Sand und Filler.

Durch den Einsatz des Peroxids und/oder des Bicarbonats kann eine Reaktion erzeugt werden, welche die Haftkraft zwischen dem bitumenhaltigen Material und der Matrix vermindert, womit eine Trennung des Konglomerats erreicht werden kann. Weiter kann damit auch eine Trennung des bituminösen Materials von dem Splitt und gegebenenfalls von Sand und Filler erreicht werden. Auch Sekundäreffekte der Reaktion (Wärmeentwicklung, Blasenbildung etc.) führen dabei zur besseren Trennung des bitumenhaltigen Materials von dem Splitt. Weiter könnte aber auch Bestandteile der Matrix, an welcher das bituminöse Material haftet (Splitt, Sand, Filler etc.) durch eine chemische und/oder physikalische Reaktion angegriffen respektive aufgelöst werden.

In einer besonders bevorzugten Ausführungsform des Verfahrens wird entweder ein Peroxid oder ein Bicarbonat eingesetzt. In Varianten können aber auch das Peroxid zusammen mit dem Bicarbonat eingesetzt werden.

Das Peroxid kann grundsätzlich als beliebiges Peroxid vorliegen. Besonders bevorzugt wird jedoch Wasserstoffperoxid eingesetzt, da sich dieses lediglich zu Wasser und Sauerstoff zersetzt und somit insbesondere das Prozesswasser nicht verunreinigt wird.

Das Bicarbonat kann grundsätzlich in verschiedenen Formen vorliegen, vorzugsweise jedoch als Natriumhydrogencarbonat.

Neben dem Peroxid und/oder dem Bicarbonat können aber auch weitere Stoffe zugesetzt werden, um das Verfahren zu optimieren (siehe unten zu "zweite Substanz") - diese sind aber für das Verfahren nicht zwingend notwendig, da dies überraschenderweise mit Peroxid respektive mit Bicarbonat bereits gut funktioniert.

Die Zugabe des Wasserstoffperoxids und/oder des Bicarbonats wird vorzugsweise derart gesteuert, dass Konglomerate des bitumenhaltigen Strassenbelagmaterials disaggregiert werden. Einerseits wird vorzugsweise die Konzentration des Wasserstoffperoxids sowie die Zugaberate und anderseits die gesamte Zeitspanne des Prozesses entsprechend gesteuert. Besonders bevorzugt werden zu Beginn des Verfahrens, über einen ersten Zeitraum das Wasserstoffperoxid und/oder das Bicarbonat kontinuierlich zugegeben und in einem zweiten, auf den ersten Zeitraum folgenden Zeitraum, kein Wasserstoffperoxid und/oder das Bicarbonat zugegeben. Damit lässt man vorzugsweise nach der Zugabe des Wasserstoffperoxids und/oder das Bicarbonats während eines zweiten Zeitraums die Reaktionsmischung ausreagieren. Damit kann bitumenhaltiges Strassenbelagsmaterial in der Form von Abbruchmaterial und/oder Fräsgut besonders effizient, kostengünstig und im Wesentlichen emissionsfrei disaggregiert werden.

In Varianten kann das Verfahren auch nur solange durchgeführt werden, bis die Konglomerate eine gewisse Grenzgrösse unterschritten haben - dies hängt von der weiteren Verwendung der Konglomerate ab. Besonders bevorzugt wird jedoch das Verfahren auch nach dem vollständigen Disaggregieren des bitumenhaltigen Strassenbelagsmaterial weitergeführt. Es wurde nämlich - ebenfalls überraschend - festgestellt, dass bei einer Weiterführung des Verfahrens eine Trennung des bitumenhaltigen Materials von dem Splitt erfolgt.

Bevorzugt erfolgt die Zugabe des Wasserstoffperoxids und/oder des Bicarbonats unter Niveau. Durch die Zudosierung unter Niveau wird erreicht, dass die Gasblasen innerhalb des Gemischs erzeugt werden und so durch deren Aufsteigen im Gemisch den bestmöglichen Trenneffekt erreichen können. Daher ist die erste Austrittsöffnung vorzugsweise in Bodennähe des Behälters vorgesehen. Studien haben gezeigt, dass die durch das Wasserstoffperoxid erzeugten Gasblasen während einer ersten Zeitspanne nach deren Erzeugung besonders klein sind (sogenannte Nanobubbles). Diese Nanobubbles weisen im Wasser bei der Erzeugung einen sehr hohen inneren Druck auf, welcher grösser als 3 bar, bis zu 10 bar oder mehr betragen kann. Damit wird die physiomechanische Trennung des Bitumens und der Mineralien gefördert, insbesondere da die Nanobubbles besonders effektiv in kleineste Poren/Kanäle des Konglomerats eindringen und dies damit disaggregieren respektive auftrennen können. Aber auch nach der Disaggregierung können die Nanobubbles in Poren/Kanäle zwischen dem Splitt und dem Bitumen eindringen und damit bei Fortsetzung des Verfahrens eine Trennung des bitumenhaltigen Materials von dem Splitt und insbesondere von Sand und Filler bewirken.

Die Zugabe des Wasserstoffperoxids und/oder des Bicarbonats kann zum Beispiel über eine Rohrführung in das Gemisch geführt werden. Die Rohrführung innerhalb des Gemischs geführt sein, so dass eine Aussenwand des Rohrs im Kontakt mit dem Gemisch ist. In einer speziellen Variante kann das Rohr zum Beispiel mit einem Rührwerk verbunden sein, so dass das Wasserstoffperoxid und/oder das Bicarbonat entlang eines Rührarms oder der Rührwelle geführt sein. Insbesondere kann das Rohr selbst auch als Rührwelle ausgebildet sein. In weiteren Varianten mündet das Rohr von aussen in einen Behälterboden oder eine Seitenwand des Reaktors, womit das Wasserstoffperoxid und/oder das Bicarbonat von unten oder seitlich in das Gemisch geführt werden kann.

In Varianten kann das Wasserstoffperoxid und/oder das Bicarbonat auch über Niveau dem Gemisch zugegeben werden.

Um einen Rückfluss im Rohr zu verhindern, kann dieses mit einem Rückschlagventil ausgestattet sein. Darauf kann aber auch verzichtet werden.

Besonders bevorzugt werden das Wasserstoffperoxid und/oder das Bicarbonat als wässrige Lösung dem Gemisch zugegeben. In besonderen Varianten kann insbesondere das Bicarbonat auch als Feststoff zugegeben werden.

Um die Zersetzung des Wasserstoffperoxids zu forcieren, kann ein Katalysator wie zum Beispiel FeCl₃ eingesetzt werden. Weiter kann stattdessen auch die Temperatur des Gemischs respektive das Wasserstoffperoxid im Bereich des Eintritts lokal erhitzt werden (siehe unten). In Varianten kann auf den Katalysator auch verzichtet werden, insbesondere wenn das Prozesswasser und/oder das Strassenbelagsmaterial bereits entsprechende Stoffe umfasst.

Um den Effekt der Disaggregierung möglichst vollständig auszuschöpfen, wird vorzugsweise das bitumenhaltige Strassenbelagsmaterial nach dem Abbruch der Strasse direkt mit Wasser zu einem Gemisch vermengt und damit dem erfindungsgemässen Verfahren zugeführt. Das bitumenhaltige Strassenbelagsmaterial wird somit nach dem Strassenabbruch unverarbeitet als Abbruchmaterial und/oder Fräsgut in den Reaktor gegeben und mit Wasser zu einem Gemisch vermengt. Damit wird ein besonders effizientes Verfahren geschaffen, da zwischen dem Strassenabbruch und dem Verfahren zur Aufbereitung des bitumenhaltigen Strassenbelagsmaterial keine Zwischenschritte wie Zerkleinerung, Vorreinigung, Trennung etc. anfallen.

In Varianten können aber dennoch Zwischenschritte wie zum Beispiel eine Auftrennung nach Bruchstückgrösse, insbesondere beim Strassenabbruchmaterial vorgesehen sein - auch wenn alle Bruchstücke demselben Verfahren zugeführt werden, kann es von Vorteil sein, sehr grosse Bruchstücke aufgrund einer allfällig längeren Verweildauer bis zur Disaggregierung in einem separaten Reaktor zu behandeln.

Das Gemisch wird vorzugsweise erhitzt, insbesondere auf eine Temperatur von über 50°C besonders bevorzugt über 60°C. Durch die erhöhte Temperatur werden chemische Reaktionen beschleunigt, womit das Verfahren weniger Zeit in Anspruch nimmt. Insbesondere bei Temperaturen im Bereich und über 60 °C konnte ein ideales Gleichgewicht zwischen Energieaufwand und Zeitaufwand gefunden werden, so dass besonders bevorzugt eine Temperatur kleiner 90°C, vorzugsweise kleiner 80°C und insbesondere bevorzugt kleiner 70°C ist.

In Varianten kann das Verfahren auch unter 50°C durchgeführt werden, insbesondere bei zum Beispiel 40°C oder auch Raumtemperatur (siehe unten). In einem solchen Fall kann es von Vorteil sein, einen Katalysator einzusetzen, um das Verfahren zur Disaggregierung respektive der Trennung des bitumenhaltigen Materials vom Splitt durch das Peroxid und/oder das Bicarbonat zu unterstützen. Weiter kann das Verfahren auch bei über 90°C durchgeführt werden.

Vorzugsweise umfasst das bitumenhaltige Strassenbelagsmaterial Splitt, Sand, Filler und bituminöses Material, wobei das Verfahren solange durchgeführt wird, bis mindestens 80%, vorzugsweise mindestens 90% besonders bevorzugt mindestens 95% des Splitt aus dem bitumenhaltigen Strassenbelagsmaterial abgetrennt ist. Der zurückgewonnene Splitt und Sand kann wiederum zur Verwendung in einem Strassenbelag eingesetzt werden. In Varianten kann das Verfahren auch abgebrochen werden, wenn weniger als 80% des Splitts aus dem bitumenhaltigen Strassenbelagsmaterial abgetrennt sind.

Bevorzugt wird das Verfahren solange durchgeführt wird, bis eine an dem Splitt anhaftende Restmenge an bituminösem Material weniger als 3 gew.%, vorzugsweise weniger als 1 gew.%, insbesondere bevorzugt weniger als 0.3 gew.% beträgt. Damit wird ein besonders sauber gereinigter Splitt erhalten, welcher insbesondere ohne zusätzliche Reinigung direkt wieder in der Herstellung von Asphalt verwendet werden kann. In Varianten kann die Restmenge auch höher als 1 gew.% sein.

Vorzugsweise wird das bituminöse Material an einer Flüssigkeitsoberfläche des Gemischs, insbesondere mittels Flotation gesammelt. Dies hat den Vorteil, dass das bitumenhaltige Material besonders einfach aus dem Gemisch entfernt werden kann, insbesondere durch Abschöpfen, Dekantieren etc. Es existieren unterschiedliche Techniken, welche das Ansammeln des bitumenhaltigen Materials an der Flüssigkeitsoberfläche begünstigen können, insbesondere zum Beispiel durch die Wahl einer Flüssigkeit mit hoher Dichte (siehe weiter unten). Es ist jedoch nicht zwingend notwendig, dass die Flüssigkeit eine höhere Dichte aufweist, als das bitumenhaltige Material (siehe weiter unten).

In Varianten kann das bitumenhaltige Material auch in der Flüssigkeit, zum Beispiel durch Filter, Adsorptionsmaterialien oder dergleichen abgefangen werden. Weiter kann das bitumenhaltige Material an einem Behälterboden ausgetragen werden, insbesondere wenn zum Beispiel das bitumenhaltige Material eine höhere Dichte aufweist als die Flüssigkeit. Weiter kann das bituminöse Material auch über eine Zentrifuge oder Mahlung von den Sedimenten und Gesteinen getrennt werden.

Das bitumenhaltige Strassenbelagsmaterial umfasst bevorzugt zumindest teilweise bituminöses Material mit einem Penetrationswert von weniger als 25 10⁻¹ mm, vorzugsweise weniger als 20 10⁻¹ mm, insbesondere weniger als 15 10⁻¹ mm. Besonders bevorzugt weist das bituminöse Material einen Penetrationswert (Nadel-Penetration bei 25 °C) von weniger als 5 10⁻¹ mm, vorzugsweise weniger als 3 10⁻¹ mm, insbesondere weniger als 1 10⁻¹ mm auf. Der Penetrationswert des bituminösen Materials in einem Strassenbelag nimmt typischerweise mit steigendem Alter ab. In Varianten kann eine Penetration des bituminösen Materials auch mehr als 25 10⁻¹ mm betragen.

Vorzugsweise weisen mindestens 30 gew.%, vorzugsweise mindestens 50 gew.%, insbesondere mindestens 75 gew.% des bitumenhaltigen Strassenbelagmaterials beim Vermengen mit dem Wasser eine Konglomeratgrösse von mehr als 5 cm auf. Damit werden besonders grosse Bruchstücke für das Verfahren zugelassen, welche insbesondere keiner Vorbehandlung unterliegen. Die Konglomerate werden vorzugsweise direkt nach dem Abbruch der Strasse dem Verfahren zugeführt. Die Konglomeratgrösse kann wesentlich grösser gewählt werden, insbesondere können auch Bruckstücke von bitumenhaltigem Strassenbelagsmaterial mit einem grössten Durchmesser von mehr als 10 cm, insbesondere mehr als 20 cm, besonders bevorzugt von mehr als 40 cm eingesetzt werden.

In Varianten können auch kleinere Konglomeratgrössen eingesetzt werden. Die Schwierigkeit des Verfahrens besteht ja grundsätzlich darin, dass auch grosse Bruchstücke das Verfahren ohne Vorbehandlung durchlaufen können. Grundsätzlich wird das Verfahen etwas schneller ablaufen, wenn die Bruchstücke kleiner sind - dies bedingt jedoch aufwändige Brechverfahren oder Abriebverfahren, welche dem vorliegenden Verfahren zur Aufbereitung vorgeschalten werden müssten.

Bevorzugt wird ein Dichteunterschied zwischen dem an der Oberfläche auftreibenden bituminösen Material und dem Gemisch durch Zugabe mindestens einer die Dichte beeinflussenden ersten Substanz vergrössert wird, wobei die erste Substanz insbesondere eine Lauge, eine Säuren, ein Salz und/oder Bestandteile aus Strassenbelagsmaterial umfasst. Durch die Vergrösserung des Dichteunterschieds kann der Auftrieb des bitumenhaltigen Materials nach dem Abtrennen von der Matrix vergrössert werden, womit das bitumenhaltige Material schneller an die Flüssigkeitsoberfläche gelangt. Damit wird wiederum das Trennverfahren effizienter und schneller durchführbar.

In Varianten kann auf eine Zugabe der ersten Substanz auch verzichtet werden.

Vorzugsweise umfasst die die Dichte beeinflussende erste Substanz eine wasserlösliche erste Substanz, insbesondere eine Lauge oder eine Säure wie zum Beispiel Natronlauge (NaOH) oder ein Salz, vorzugsweise Natriumchlorid, Magnesiumchlorid, Kalziumchlorid, Kaliumchlorid, Natriumcarbonat, Natriumnitrat, Zucker wie Polysaccharide, Glucose, Fructose, Saccharose, Schwebstoffe (z.B. Filler) etc. oder eine Mischung davon, oder eine wasserlösliche Flüssigkeit, insbesondere ein wasserlösliches Polyol wie Glyzerin, welches direkt oder indirekt dem Gemisch zugegeben wird.

Die Verwendung von Salzen beziehungsweise Zucker hat den Vorteil, dass diese typischerweise in Wasser eine gute Löslichkeit aufweisen. Die Salze, insbesondere Alkali- und Erdalkalihalogenide sind besonders kostengünstig und gleichzeitig gut lösbar in Wasser und umweltverträglich. Carbonate und Nitrate weisen ebenfalls eine gute Löslichkeit in Wasser auf. Die Carbonate, insbesondere Natriumcarbonat, weist den Vorteil auf, dass sie Chloridfrei und Nitratfrei, und damit besonders umweltverträglich sind. Dem Fachmann sind weitere Salze bekannt, welche ebenfalls hinreichend wasserlöslich oder suspendierbar sind und damit zur Erhöhung der Dichte dienen können. Weitere Möglichkeiten bilden die Polyole, welche typischerweise in beliebigem Verhältnis mit Wasser mischbar sind und daher ebenfalls verwendet werden können. Von den Polyolen ist Glyzerin besonders zu bevorzugen, da dies besonders kostengünstig und gleichzeitig ungiftig ist.

Vorzugsweise umfasst das bitumenhaltige Strassenbelagsmaterial Bindemittel zum Erreichen einer Verbindung zwischen bitumenhaltigem Material und Kies, wobei die Bindemittel insbesondere Polymere, vorzugsweise Styrol-Butadien-Styrol, Amidester und/oder Cellulosefasern umfasst. Damit wird eine besonders starke Bindung zwischen dem Kies und dem bitumenhaltigen Material erreicht. Dem Fachmann sind auch andere Bindemittel bekannt, welche eine Bindung zwischen Kies und bitumenhaltigem Material verbessern können. Es wurde überraschend festgestellt, dass das Verfahren zur Aufbereitung des bitumenhaltigen Strassenbelagsmaterial nur unwesentlich durch die Bindemittel beeinflusst wird.

Das Verfahren kann aber auch mit bitumenhaltigem Strassenbelagsmaterial durchgeführt werden, welches keine Zusätze von Bindemittel enthält, typischerweise dürfte das Verfahren in diesen Fällen schneller respektive mit weniger Peroxid und/oder Bicarbonat durchführbar sein.

Vorzugsweise liegt eine Haftung zwischen dem bituminösen Material und dem Kies des bitumenhaltigem Strassenbelagsmaterial zwischen 70% und 80%. Damit ist die Oberfläche des Kies zumindest zu 70% bis 80% mit bituminösem Material belegt. Auch hier wurde überraschend festgestellt, dass das Verfahren im Wesentlichen unabhängig vom Bedeckungsgrad des Kies durch bituminöses Material funktioniert.

In Varianten kann auch bitumenhaltiges Strassenbelagsmaterial eingesetzt werden, welches einen geringeren Bedeckungsgrad aufweist, insbesondere weniger als 70%. Auch in diesen Fällen dürfte das Verfahren schneller respektive mit weniger Peroxid und/oder Bicarbonat durchführbar sein.

Vorzugsweise ist ein Anteil an VOC im bituminösen Material kleiner als 1 gew.%, vorzugsweise kleiner als 0.5 gew.%, insbesondere bevorzugt kleiner als 0.1 gew.% (siehe dazu auch weiter unten). Es konnte wiederum überraschenderweise nachgewiesen werden, dass auch bei sehr kleinen Anteilen an VOC respektive leichtflüchtigen organischen Bestandteilen das Verfahren zur Aufbereitung von bitumenhaltigem Strassenbelagsmaterial sehr gut funktioniert. In Varianten kann der VOC-Anteil aber auch über 1 gew.% liegen, ohne das Verfahren negativ zu beeinträchtigen.

Aufgrund des allgemeinen Fachwissens wurde generell erwartet, dass durch die hohe Haftung des bituminösen Materials an dem Kies respektive durch das Zusetzen von Bindemittel, das austreiben von VOC (egal ob währen der Herstellung des Strassenbelags oder während des Alterungsprozesses) ein Trennverfahren in einer wässrigen Umgebung nicht oder nicht hinreichend effizient möglich ist. Trotz der widrigen Bedingungen ist es nun überraschend gelungen, in wässriger Umgebung Konglomerate von bitumenhaltigem Strassenbelagsmaterial zu disaggregieren und anschliessend, durch dasselbe Verfahren, d.h. vorzugsweise durch weitere Zugabe von Peroxid und/oder Bicarbonat das bituminöse Material vom Splitt zu trennen.

In einem weiteren Verfahren wird ein bitumenhaltiger Sekundärrohstoff mit einer Flüssigkeit zu einem Gemisch vermengt, worauf zumindest ein Teil des bituminösen Materials aus der Matrix abgetrennt wird. Damit können in einfacher Weise das bituminöse Material und die Mineralien zurückgewonnen und wiederverwendet werden. Das bituminöse Material kann zum Beispiel wiederum zur Herstellung von Produkten, aus welchen der Sekundärrohstoff gewonnen wurde, eingesetzt werden. Der Vorteil bei der Verwendung in derselben Anwendung, aus welcher der Sekundärrohstoff stammt, liegt darin, dass Reststoffe im bituminösen Material nicht respektive nicht vollständig aus dem bituminösen Material isoliert werden müssen.

Unter dem Begriff "Sekundärrohstoff" wird Material verstanden, welches bereits einmal technisch genutzt wurde und nun durch eine Aufbereitung ein zweites Mal technisch genutzt werden soll.

Die Flüssigkeit dient dazu, dass nach dem Ablösen des bituminösen Materials dasselbe effizient abtransportiert werden kann. Der Einsatz der Flüssigkeit kann gegebenenfalls auch den Vorteil aufweisen, dass diese zwischen die Matrix und das bituminöse Material eindringen und das Trennverfahren unterstützen kann. Weiter können mit der Flüssigkeit, in Abhängigkeit deren Polarität, auch Fremdstoffe der Matrix und/oder das bitumenhaltige Material gelöst werden.

In einer bevorzugten Ausführungsform umfasst die Flüssigkeit jedoch zumindest einen Hauptanteil, welcher polar ist oder besteht aus einer polaren Flüssigkeit. Dies hat den Vorteil, dass das unpolare bitumenhaltige Material sich gerade nicht in der polaren Flüssigkeit löst, so dass das bitumenhaltige Material besonders einfach, insbesondere wirtschaftlich, aus der Flüssigkeit abgetrennt werden kann. Damit kann zum Beispiel auf eine aufwändige Destillation oder Extraktion verzichtet werden. Das Abtrennen kann dabei grundsätzlich nach bekannten Verfahren erfolgen, z. B. filtern, abschöpfen, mahlen etc.

Vorzugsweise umfasst der bitumenhaltige Sekundärrohstoff bitumenhaltiges Strassenbelagsmaterial, ein aus bitumenhaltigem Strassenbelagsmaterial hergestelltes, insbesondere durch ein mechanisches Aufkonzentrierungsverfahren, besonders bevorzugt durch ein Abriebverfahren hergestelltes bitumenhaltiges Strassenbelagskonzentrat und/oder bitumenhaltige Dachpappe.

Der Sekundärrohstoff umfasst vorliegend insbesondere die bei der Strassensanierung anfallenden bitumenhaltigen Strassenbelagsmaterialien.

Es ist bekannt, aus dem bitumenhaltigen Strassenbelagsmaterial Splitt, Sand und Filler mit dem sogenannten Abriebverfahren (trocken oder nass) zurück zu gewinnen. Mit dem Abriebverfahren wird das bituminöse Material von Splitt, Sand und Filler abgerieben, womit einerseits der Splitt, Sand und das Filler und anderseits der Abrieb (ein bitumenhaltiges Strassenbelagskonzentrat, in welchem das bituminöse Material durch ein mechanisches Verfahren aufkonzentriert ist) zurück gewonnen wird - dieses Verfahren ist dem Fachmann bekannt. Der Splitt, Sand und Filler kann, gegebenenfalls nach einer Siebtrennung, wieder zur Herstellung von Strassenbelägen eingesetzt werden. Bislang wurde der durch das Abriebverfahren gewonnene Abrieb entsorgt. Der Abrieb umfasst einen grösseren Anteil an bitumenhaltigem Material als das Abbruchmaterial respektive das Fräsgut und ist daher für das vorliegende Verfahren besonders geeignet, insbesondere da bei gleicher Ausbeute an bituminösem Material mit einem kleineren Behältervolumen gearbeitet werden kann, womit wiederum weniger Flüssigkeit eingesetzt werden muss und ein Energieaufwand entsprechend reduziert werden kann (allfälliges Heizen, Rühren etc.). Auch der Abrieb wird vorliegend unter dem Begriff des Strassenbelagsmaterials subsummiert. Das vorliegende Verfahren ist jedoch speziell geeignet zum Abtrennen von bituminösem Material aus Abbruchmaterial und Fräsgut von Strassenbelagsmaterialien. Diese beiden Materialien stellen für die Auftrennung in bitumenhaltigem Material und Matrix eine besondere Herausforderung dar, da einerseits die Bruchstücke respektive die Körnung relativ gross sind und anderseits der Gehalt an bitumenhaltigen Material entsprechend niedriger ist als beim Abrieb. Der Abrieb stellt in diesem Sinne geringere Anforderungen an das Verfahren.

Im Rahmen des Abriebverfahrens wird Splitt und Sand unter Umständen nicht ausreichen respektive nicht vollständig vom bituminösen Material befreit, insbesondere können zum Beispiel konkave Bereiche der Körner nicht von dem bituminösen Material befreit werden. Der Splitt und Sand, welcher nach dem Abriebverfahren vorliegt, wird ebenso unter dem Begriff des Sekundärrohstoffes subsummier und kann somit ebenfalls dem vorliegenden Verfahren unterworfen werden. Damit kann Splitt und Sand mit grösserer Reinheit erreicht werden. In Varianten kann der Splitt und Sand nach dem Abriebverfahren auch direkt wieder eingesetzt werden.

Dem Fachmann ist klar, dass auch andere bitumenhaltige Strassenbelagskonzentrate in dem Verfahren als Sekundärrohstoff eingesetzt werden können. Das Aufkonzentrieren des bituminösen Materials kann auch über das vorliegende Verfahren selbst erreicht werden, was einem mehrfachen Durchlaufen des Verfahrens gleich kommen kann. Hierbei können sich jedoch die Parameter (Zusätze, Temperatur etc.) unterscheiden.

Konkret können die Strassenbelagsmaterialien Asphalttragschichten, Alphaltbinderschichten, Asphaltbeton, Splittmastixasphalt, Gussasphalt, offenporige Asphalte, SAMI-Schichten sowie asphalthaltige Oberflächenbehandlungen von Strassenbelägen etc. umfassen.

Weiter kann der Sekundärrohstoff auch Dachpappe umfassen. Dachpappe oder Teerpappe ist eine mit Bitumen getränkte Pappe, welche zum Beispiel als Unterdeckung unter den Dachziegeln als Feuchtigkeitssperre dient. Die Dachpappe kann grobkörnigen Sand, feinen Kies oder Schiefersplitter umfassen, womit eine höhere Abriebfestigkeit respektive UV-Resistenz erreicht wird. Weiter kann der Sekundärrohstoff auch andere bitumenhaltige Baustoffe, neben den Strassenbelagsmaterialien und der Dachpappe, umfassen, namentlich zum Beispiel Dichtungsbahnen, Isolierungen, Klebemassen, Tränkmassen, Dichtungsmassen etc.

Das Verfahren kann weiter auch zur Dekontamination von mit apolaren Substanzen verschmutzen Böden eingesetzt werden. Die Böden können zum Beispiel Bodenhorizonte unterhalb der H-, L- und O-Bodenhorizonte (organische Bodenhorizonte) sein, vorzugsweise zum Beispiel A-Horizonte, B-Horizonte, C-Horizonte und weiteren. Mit dem Verfahren kann zum Beispiel Bodenmaterial eines kontaminierten Industriegeländes saniert werden. Weiter kann das Verfahren zur Dekontamination von Böden nach einer Umweltkatastrophe eingesetzt werden. Das Verfahren kann zum Beispiel nach einem Unfall eines Öltankers eingesetzt werden, um Strandböden zu dekontaminieren. Weiter kann das Verfahren eingesetzt werden, um bei Verkehrsunfällen mit Motorenöl kontaminierter Boden zu reinigen. Weiter kann das Verfahren eingesetzt werden, um Mineralien in Strassenablaufschächten von Motorenöl zu reinigen.

Mit diesem Verfahren können zum Beispiel PAK (Polyzyklische aromatische Kohlenwasserstoffe), Fasern, Partikel und sonstige Zusatzstoffe wie mineralischen Zusatzstoffe (zum Beispiel Basalt), metallische Zusatzstoffe oder Kunststoffzusatzstoffe (Aramid etc.), welche in Asphaltmischungen aus alten Strassen vorhanden sein können, besonders effektiv und sicher entfernt werden. Dieses Verfahren kann weiter auch für die Abtrennung von Metallen im Rahmen der Reinigung von Abfällen, wie z.B. Verbrennungsrückständen wie Schlacke und Rauchasche eingesetzt werden.

Weiter können mit diesem Verfahren auch bituminöse oder ölhaltige Rückstände aus Sand, zum Beispiel im Rahmen einer Reinigung des Sandes eines Strandes zur Bewältigung von ökologischen Katastrophen, zum Beispiel durch Fahrzeugunfällen (Auto-, Lastwagen-, Flugzeug-, Schiffsunfälle etc.) entfernt werden.

Dem Fachmann sind auch weitere bitumenhaltige Sekundärrohstoffe bekannt, bei welchen das bitumenhaltige Material mittels des Verfahrens zumindest teilweise abgetrennt werden kann.

Vorzugsweise handelt es sich bei der Flüssigkeit um Wasser. Damit wird eine polare, kostengünstige, ungiftige und einfach aufzubereitende Flüssigkeit für das Verfahren gewählt, womit das Verfahren besonders wirtschaftlich durchgeführt werden kann. Weiter weist Wasser eine besonders hohe Oberflächenspannung auf, womit eine Trennschicht des aufschwimmenden bitumenhaltigen Materials besonders stabil gehalten werden kann.

In Varianten können auch andere Flüssigkeiten eingesetzt werden, insbesondere zum Beispiel Phenol, Kresol, flüssiges Schwefeldioxid, Nitrobenzol, Anilin, Toluidin, Nitrotoluol, Crotonaldehyd, Acrolein, Dichlorethylether, Furfural, Ethylanilin, Dichlorbenzol oder Mischungen der vorgenannten Flüssigkeiten mit oder ohne Zusatz von Benzol. Dem Fachmann sind weitere organische Lösemittel wie Alkohole, Polyole, wie Glyzerin, Öle, Säuren, Basen oder Mischungen der vorgenannten Flüssigkeiten bekannt, welche hierzu eingesetzt werden können. Die organischen Lösemittel haben jedoch den Nachteil, dass damit kaum ein ökonomisches als auch ökologisches Trennverfahren erreicht werden kann. Für geringe Mengen kann das Verfahren damit jedoch besonders effizient durchgeführt werden.

Weiter besteht auch die Möglichkeit ein überkritisches Gas, insbesondere überkritisches CO₂ aufgrund der apolaren Eigenschaft, für die Trennung von bituminösem Material aus der Matrix zu verwenden.

In einem bevorzugten Verfahren wird die Flüssigkeit nach dem Trennverfahren aufbereitet und wieder für ein Trennverfahren eingesetzt. Hierbei kann bei der Aufbereitung der Flüssigkeit auf ein Abtrennen der ersten Substanz verzichtet werden, da die erhöhte Dichte auch bei einem nachfolgenden Verfahren zur Trennung von bituminösem Material aus einer Matrix genutzt werden kann. Die Flüssigkeit kann auch ohne Aufbereitung direkt wieder für das Trennverfahren eingesetzt werden. Dabei kann eine geringere Zugabe von Zusatzstoffen zur Vergrösserung der Dichte vorgesehen sein respektive darauf verzichtet werden, insbesondere da zum Beispiel Schwebstoffe wie Filler, Schlamm oder andere Zusatzstoffe, welche bei früheren Trennverfahren der Flüssigkeit zugegeben wurden und daher noch in der Flüssigkeit vorhanden sind, womit die Dichte gegebenenfalls bereits hinreichend erhöht ist.

In Varianten kann auf die Zusatzstoffe zur Vergrösserung der Dichte auch verzichtet werden. Versuche haben gezeigt, dass insbesondere in einem Verfahren bei welchem der Sekundärrohstoff vorgängig einem Abriebverfahren unterworfen wurde, auf die erste Substanz verzichtet werden kann, insbesondere aus ökonomischer und ökologischer Sicht - dem Fachmann ist klar, dass die erste Substanz das Verfahren dennoch begünstigen kann. Weiter können auch andere Stoffe zugesetzt werden, um die Dichte zu erhöhen. Dem Fachmann sind dazu viele weitere Möglichkeiten bekannt.

Weiter kann gegebenenfalls auf die Zusatzstoffe zur Vergrösserung der Dichte verzichtet werden, wenn die Temperatur des Gemischs auf mehr als 35 °C erwärmt wird, da ab einer Grenztemperatur von 35 °C die Dichte von Bitumen kleiner ist, als diejenige von Wasser. (es ist anzumerken, dass je nach Bitumensorte die Grenztemperatur auch tiefer oder höher sein kann). Bei einer Temperatur unterhalb von 35 °C können entweder die Zusatzstoffe zur Vergrösserung der Dichte zugesetzt werden oder das Bitumen wird durch andere Techniken abgetrennt (siehe unten). Aber auch bei Temperaturen über 35 °C kann der Zusatz von Zusatzstoffen zur Vergrösserung der Dichte hilfreich sein, um den Dichteunterschied zwischen dem Bitumen und der Flüssigkeit zu erhöhen, womit ein Auftrieb des Bitumens und damit das Trennverfahren beschleunigt wird.

Auf das Erhöhen der Wasserdichte kann auch verzichtet werden. In diesem Fall kann das Bitumen ausgefällt werden. Zum Ausfällen des Bitumens ist insbesondere eine tiefere Temperatur von Vorteil (unter 35 °C), da in diesem Temperaturbereich die Dichte von Bitumen grösser ist, als die Dichte von Wasser. Die Abtrennung des Bitumens und des mineralischen Materialien kann zum Beispiel mittels einer selektiven Schnecke, die nur Steine und Sand aufnimmt, entfernt werden können. Weiter kann das Bitumen kontinuierlich oder diskontinuierlich vom Boden des Reaktors abgekratzt werden.

Sofern das Bitumen aufgrund eines geringen Dichteunterschieds zur Flüssigkeit oder trotz höherer Dichte aufgrund eines Rührwerks in Suspension gehalten wird, kann die Suspension in einem kontinuierlichen Prozess über einen Abscheider geführt werden, um das Bitumen abzutrennen, wobei die Flüssigkeit wieder dem Prozess zugeführt werden kann. Der Abscheider kann zum Beispiel einen Absauger oder eine Dekantiereinrichtung umfassen.

Eine weitere Möglichkeit ist, die Flüssigkeit während der Verarbeitung mit einem Zyklon zu behandeln und das Bitumen in Suspension durch einen Pump- und Wasserabscheideprozess (z.B. Zyklon, Filter) zu entfernen. Die abgetrennte Flüssigkeit kann gegebenenfalls wieder dem Reaktor zugegeben werden.

Bevorzugt umfasst die, die Dichte beeinflussende erste Substanz eine unpolare erste Substanz, welche eine geringere Dichte aufweist als das bituminöse Material, wobei die unpolare erste Substanz dem bituminösen Material zugegeben wird. Damit kann die Dichte des aufschwimmenden bitumenhaltigen Materials verringert werden, womit einem Absinken in die Flüssigkeit entgegen gewirkt werden kann. Solche unpolare Substanzen sind dem Fachmann in einer Vielzahl bekannt. Zum Beispiel können, insbesondere Gase wie Luft, CO₂, niedermolekulare, aliphatische Kohlenwasserstoffe, wie Propan, Butan eingesetzt werden. Prinzipiell können beliebige Erdölfraktionen zugegeben werden, welche eine kleinere Dichte als diejenige des Bitumens aufweisen. Im Verfahren kann mit der unpolaren ersten Substanz auf der Flüssigkeitsoberfläche ein Film oder eine Flüssigkeitsschicht gebildet werden, womit sich aufsteigendes bituminöses Material in der unpolaren ersten Substanz auflöst und damit nicht wieder absinken kann.

In Varianten kann auf die unpolare erste Substanz auch verzichtet werden.

Vorzugsweise wird durch das Zugeben mindestens einer zweiten Substanz eine chemische und/oder physikalische Reaktion im Gemisch erzeugt. Mit einer geeigneten Reaktion kann die Haftkraft zwischen dem bitumenhaltigen Material und der Matrix vermindert werden, womit das Trennverfahren optimiert werden kann. Hierbei können auch Sekundäreffekte der Reaktion (Wärmeentwicklung, Blasenbildung etc.) zur besseren Trennung des bitumenhaltigen Materials von der Matrix führen. Weiter könnte aber auch die Matrix selbst durch die chemische und/oder physikalische Reaktion angegriffen respektive aufgelöst werden.

In Varianten kann auf die Zugabe der zweiten Substanz auch verzichtet werden. Versuche haben gezeigt, dass insbesondere in einem Verfahren bei welchem der Sekundärrohstoff vorgängig einem Abriebverfahren unterworfen wurde, auf die zweite Substanz verzichtet werden kann, insbesondere aus ökonomischer und ökologischer Sicht. Dem Fachmann ist klar, dass mit dem Einsatz einer zweiten Substanz das Verfahren begünstigt werden kann.

Vorzugsweise umfasst die zweite Substanz Natriumhydrogencarbonat und/oder Essigsäure. Besonders bevorzugt wird sowohl Natriumhydrogencarbonat als auch Essigsäure zugegeben. Damit können im Gemisch Blasen generiert werden, welche sich lösendes bitumenhaltiges Material nach oben, an die Flüssigkeitsoberfläche tragen (siehe weiter unten). Weiter können die einzelnen zweiten Substanzen dazu dienen, das bitumenhaltige Material von der Matrix abzulösen.

In Varianten kann auf die Zugabe von Natriumhydrogencarbonat respektive Essigsäure auch verzichtet werden.

Bevorzugt umfasst die zweite Substanz ein Trennungsmittel, insbesondere ein Peroxid, vorzugsweise Wasserstoffperoxid, Sauerstoff, Hydroxidradikale, Perhydroxyl, Hyperoxid, Bicarbonate, Percarbonate, Benzolhydroxid, Alkalihyperoxide (Natrium, Kalium, Lithium) oder einer Kombination der vorstehenden. Mit dem Einsatz von Trennungsmitteln, insbesondere zum Beispiel Wasserstoffperoxid, können organische Moleküle, insbesondere organische Polymere und Öle mittels freier Radikale aufgebrochen werden, womit die Bindung zwischen dem bituminösen Material und der Matrix gelockert werden kann. Weiter kann durch den Einsatz von beispielsweise Wasserstoffperoxid Kalkstein an der Oberfläche angegriffen werden, womit durch diese Auflösungsreaktion der Kalksteinoberfläche das bitumenhaltige Material einfacher abgelöst werden kann. Hierbei ist es nicht notwendig, den Kalkstein vollständig aufzulösen. Ein analoger Effekt mit anderen Matrixmaterialien kann ebenfalls mit Peroxiden oder anderen Substanzen erreicht werden. Dem Fachmann sind entsprechende Reaktionen bekannt. Die Peroxide können besonders effektiv in der Kombination mit Tensiden sein.

In Varianten kann auf obig genannte Stoffe auch verzichtet werden.

Vorzugsweise umfasst die zweite Substanz Tenside und/oder Ambiphile. Insbesondere in Kombination mit Peroxiden, vorzugsweise Wasserstoffperoxid, kann damit eine besonders effiziente Ablösung des bituminösen Materials erreicht werden. Wasserstoffperoxid wirkt als Katalysator, womit eine Schaumschicht erzeugt wird, in welchem das bitumenhaltige Material emulgiert ist. Durch die oxidative Wirkung des Peroxids werden zudem organische Schadstoffe abgebaut und in die Emulsion überführt.

In Varianten kann auf die Tenside respektive die Ambiphile auch verzichtet werden.

Bevorzugt wird die zweite Substanz mit einem elektrochemischen und/oder chemischen System erzeugt. Damit kann die zweite Substanz in situ produziert und zudosiert werden. Dies ist insbesondere bei Stoffen mit höherem Gefahrenpotential, wie zum Beispiel einem starken Oxidationsmittel, von Vorteil, da ein sicheres Arbeiten möglich ist.

In Varianten kann auf die Herstellung der zweiten Substanz vor Ort auch verzichtet werden.

Vorzugsweise wird die zweite Substanz zeitlich verteilt dem Gemisch zugegeben, so dass eine Überreaktion verhindert werden kann. Damit wird insbesondere verhindert, dass durch übermässige Blasenbildung Sande und Filler zusammen mit dem bituminösen Material an die Flüssigkeitsoberfläche getragen werden.

Bevorzugt wird die zweite Substanz während des Abtrennens zumindest eines Teils des bituminösen Materials aus der Matrix kontinuierlich oder in mehreren Portionen zugegeben. Damit kann eine Überreaktion verhindert werden, womit das bituminöse Material in grösserer Reinheit gewonnen werden kann. Bei einer kontinuierlichen Zugabe können dem Fachmann bekannte Fördermittel für Flüssigkeiten respektive Feststoffe eingesetzt werden (Tropftrichter, Pumpe, Förderschnecke etc.). Diese Fördermittel können auch für die portionenweise Zugabe eingesetzt werden und dosieren vorzugsweise vollautomatisch zu. Die Dosiermenge kann einerseits von der Batchgrösse abhängen. Weiter kann die Dosierung auch anhand eines gemessenen Parameters, zum Beispiel der Schaumbildung, der Wärmeentwicklung etc. gesteuert, insbesondere automatisch geregelt werden.

In Varianten kann die Dosierung auch von Hand erfolgen. Weiter kann die zweite Substanz auch in einer einzigen Dosis zugegeben werden.

Vorzugsweise wird während des Abtrennens zumindest eines Teils des bituminösen Materials aus der Matrix, eine Konzentration der zweiten Substanz bezogen auf ein Gesamtgewicht des Gemischs auf höchstens 1.0 gew.%, vorzugsweise auf höchstens 0.5 gew.% erhöht. Durch die stetige respektive die diskrete Zugabe der zweiten Substanz in das Gemisch kann die Reaktion in einem für die Abtrennung des bituminösen Materials optimalen Bereich gesteuert werden. Damit kann insbesondere auch die Gesamtmenge der zweiten Substanz im Gemisch optimiert werden, womit wiederum das Verfahren besonders wirtschaftlich durchgeführt werden kann. Besonders bevorzugt handelt es sich hierbei um ein Oxidationsmittel, wie zum Beispiel ein Peroxid, insbesondere Wasserstoffperoxid.

Je nach Zusammensetzung des Gemischs respektive je nach Art des bitumenhaltigen Sekundärrohstoffes und der eingesetzten zweiten Substanz können auch höhere Endkonzentrationen als 1.0 gew.% vorgesehen sein.

Vorzugsweise wird die zweite Substanz dem Gemisch als eine Lösung zugegeben. Damit wird eine besonders einfache und präzise Dosierung ermöglicht. In Varianten kann die zweite Substanz auch als Feststoff zugegeben werden.

Vorzugsweise beträgt eine Konzentrationsänderung der zweiten Substanz bezogen auf das Gesamtgewicht des Gemischs zwischen 10⁻² und 10⁻⁵ gew.% pro Minute, vorzugsweise zwischen 10⁻³ und 10⁻⁴ gew.% pro Minute. Vorzugsweise wird die Konzentrationsänderung derart gesteuert, dass keine übermässige Schaumbildung erfolgt. Damit kann die Reinheit des bituminösen Materials erhöht werden. Dem Fachmann ist klar, dass die Konzentrationsänderung auch grösser als 0.01 gew.% pro Minute oder auch kleiner als 10⁻⁵ gew.% sein kann. Hierbei gilt es abzuwägen zwischen der Anforderung an die Qualität des bituminösen Materials und dem Zeitbedarf (und damit der Wirtschaftlichkeit) des Verfahrens.

Vorzugsweise werden im Gemisch Gasblasen freigesetzt, so dass das bituminöse Material zumindest teilweise an Gasblasen anhaftet und an die Oberfläche des Gemischs auftreibt. Damit können bituminösen Teilchen, welche von der Matrix gelöst werden konnten, schneller an die Oberfläche der Flüssigkeit transportiert werden. Weiter können mit den aufsteigenden Gasblasen die bituminösen Teilchen auch an der Flüssigkeitsoberfläche gehalten werden, sofern die Dichte der Flüssigkeit nicht höher als diejenige des bituminösen Materials ist.

In Varianten kann auf die Gasblasen auch verzichtet werden.

Bevorzugt werden die Gasblasen durch die zweite Substanz, insbesondere durch eine chemische Reaktion, erzeugt. Damit können die Gasblasen direkt am Ort erzeugt werden, an welchem das bituminöse Material von der Matrix gelöst wird. Somit kann das Ablösen des bituminösen Materials gleichzeitig mit dem Abtransport über die Gasblasen erfolgen. Damit kann verhindert werden, dass das bituminöse Material nach der Ablösung gleich wieder an der Matrix anhaftet. Die Gasblasen können zum Beispiel mit einem Trennungsmittel wie einem Peroxid erzeugt werden, womit einerseits über die Sauerstoffradikale organische Verbindungen aufgebrochen werden können, um das bituminöse Material von der Matrix zu trennen und gleichzeitig durch den gebildeten Sauerstoff Sauerstoffblasen zu erzeugen, welche das bituminöse Material nach oben, an die Flüssigkeitsoberfläche tragen. In einer weiteren Ausführungsform werden die Gasblasen durch den Einsatz von Natriumbicarbonat gebildet, womit die Gasblasen mit Kohledioxid gebildet werden.

Generell hat die Erzeugung der Gasblasen mit der zweiten Substanz den Vorteil, dass damit besonders feine Gasblasen gebildet werden können, welche das bituminöse Material effizient erfassen und nach oben, an die Flüssigkeitsoberfläche tragen können.

In Varianten können die Gasblasen auch anderweitig erzeugt werden, namentlich können die Gasblasen auch mit einer Pumpe und/oder einem separaten zweiten Behälter, insbesondere einem Druckbehälter erzeugt werden. Dies kann insbesondere dann von Vorteil sein, wenn eine besonders geringe Menge der zweiten Substanz zum Ablösen des bituminösen Materials notwendig ist, so dass zu wenige Gasblasen für den Transport des bituminösen Materials erzeugt werden. Anderseits können auch zweite Substanzen vorgesehen sein, welche keine Gasblasen erzeugen, auch in diesem Fall kann eine Pumpe oder ein Druckbehälter zur Erzeugung der Gasblasen sinnvoll sein.

Vorzugsweise werden die Gasblasen durch eine chemische Reaktion erzeugt, wobei die zweite Substanz insbesondere ein Peroxid, ein Bicarbonat, ein Percarbonat oder eine Kombination der vorstehenden umfasst. Diese Wahl der zweiten Substanz ermöglicht bei einer Zersetzung eine besonders effiziente Bildung von Gasblasen. Vorzugsweise wird aufgrund der geringen Kosten und der guten Verfügbarkeit sowie aufgrund der Reaktionsfreudigkeit Wasserstoffperoxid eingesetzt. Dem Fachmann ist aber klar, dass auch andere zweite Substanzen eingesetzt werden können.

Bevorzugt wird die chemische Reaktion zur Bildung der Gasblasen durch Hitze und/oder durch Zugabe eines Katalysators, vorzugsweise Eisenchlorid, Eisenoxid, Ozon, Javelwasser, Kaliumjodid oder eine Mischung davon, beschleunigt. Vorzugsweise wird im Verfahren damit eine Zersetzung des Peroxid, des Carbonats und/oder des Bicarbonats beschleunigt, um insgesamt das Trennverfahren zu beschleunigen. Damit wird, neben der zeitlichen Effizienz, auch ein besonders kostengünstiges Verfahren geschaffen.

Durch den Einsatz eines Katalysators kann die Zersetzung und damit die Bildung von Gasblasen bei tiefer Temperatur erreicht werden. Da auf einen Aufheizvorgang verzichtet werden kann, kann damit das Verfahren schneller durchgeführt und ein Energieverbrauch verringert werden. Damit können wiederum die Kosten des Verfahrens minimiert werden.

Durch das Erhitzen wird ebenfalls eine Beschleunigung der Zersetzungsreaktion von zum Beispiel Peroxiden wie Wasserstoffperoxid respektive von Carbonaten, Bicarbonaten etc. erreicht. Auch damit kann das Verfahren in besonders kurzer Zeit durchgeführt werden.

In einer weiteren Variante, insbesondere bei einer reaktionsträgeren zweiten Substanz kann auch gleichzeitig zum Erhitzen ein Katalysator eingesetzt werden.

In einer weiteren Variante kann auf den Einsatz von Katalysatoren respektive auf das Erhitzen auch verzichtet werden. Die zweite Substanz kann auch auf andere Weisen angeregt werden, um Gasblasen zu bilden, insbesondere durch eine mechanische Beanspruchung, durch Mikrowellen, Schallwellen, UV-Licht etc.

In weiteren Varianten können auch andere Peroxide respektive weitere dem Fachmann bekannte Trennungsmittel zur Erzeugung von Gasblasen eingesetzt werden. Wie bereits erläutert, können die Gasblasen auch anderweitig, ohne chemische Reaktionen, erzeugt werden, so zum Beispiel durch eine Gaspumpe oder dergleichen.

Bevorzugt wird die zweite Substanz über eine erste Austrittsöffnung unter Niveau dem Gemisch zudosiert und wobei ein lokaler Bereich um die erste Austrittsöffnung erhitzt wird und/oder dem lokalen Bereich um die erste Austrittsöffnung der Katalysator zudosiert wird. Unter lokalem Erhitzen wird ein Erhitzen eines Teils des Gemischs auf eine Temperatur verstanden, welche höher liegt als eine Durchschnittstemperatur des Gemischs. Das lokale Erhitzen erfolgt dabei innerhalb des Gemischs. Durch die Zudosierung unter Niveau wird erreicht, dass die Gasblasen innerhalb des Gemischs erzeugt werden und so durch deren Aufsteigen im Gemisch den bestmöglichen Trenneffekt erreichen können. Daher ist die erste Austrittsöffnung vorzugsweise in Bodennähe des Behälters vorgesehen. Um im Bereich der Austrittsöffnung die Gasblasenbildung effizient zu erreichen, ist vorgesehen, dort die Bildung der Gasblasen durch lokales Erhitzen und/oder die Zugabe eines Katalysators zu beschleunigen. Damit kann mit einer geringen Energiemenge respektive Katalysatormenge ein optimaler Effekt bei der Bildung der Gasblasen erreicht werden.

In Varianten können die Gasblasen auch ausserhalb des Behälters erzeugt werden (siehe unten).

In einem besonders bevorzugten Verfahren wird als Katalysator FeCl₃ eingesetzt. Damit wird ein besonders effizienter und zugleich ökologisch gut verträglicher Katalysator verwendet. Dem Fachmann sind aber auch andere Katalysatoren bekannt, welche vorliegend zur Anwendung kommen könnten.

Der Katalysator kann weiter insbesondere als homogener Katalysator oder als heterogener Katalysator, wie zum Beispiel als Eisendraht oder als geeignete Keramik vorliegen. Ein heterogener Katalysator kann beispielswiese im Bereich der ersten Austrittsöffnung respektive mit der ersten Austrittsöffnung fest oder lösbar verbunden sein. Weiter kann ein heterogener Katalysator auch mit einer Behälterwandung, insbesondere einem Behälterboden und/oder Behälterwänden fest oder lösbar verbunden sein. In der bevorzugten Ausführungsform liegt der Katalysator jedoch als homogener Katalysator vor. Besonders bevorzugt wird der Katalysator dem Gemisch in Form einer Lösung, insbesondere einer wässrigen Lösung oder einer Suspension zudosiert.

Vorzugsweise erfolgt die Erhitzung des lokalen Bereichs der ersten Austrittsöffnung mit Wasserdampf und/oder Heisswasser. Das lokale Erhitzen erfolgt dabei vorzugsweise innerhalb des Gemischs. Damit kann eine beschleunigte Zersetzung des Peroxids erreicht werden, ohne dass das Gemisch als Ganzes aufgeheizt werden muss respektive ohne dass ein Katalysator eingesetzt werden muss. Wahlweise kann jedoch zusätzlich auch ein Katalysator eingesetzt werden. Ebenso kann trotzdem das Gemisch als Ganzes auf eine Temperatur unter der lokalen Erhitzungstemperatur aufgeheizt werden. Damit kann das Gemisch global beispielsweise eine Temperatur von 30 °C aufweisen, während lokal, im Bereich der ersten Austrittsöffnung, eine Temperatur von zum Beispiel 50 °C oder 80 °C herrscht. Der Wasserdampf und/oder das Heisswasser können zur direkten Erhitzung eingesetzt werden, indem der Wasserdampf und/oder das Heisswasser direkt dem Gemisch zugeführt werden. In Varianten kann mit dem Wasserdampf und/oder dem Heisswasser der lokale Bereich um die erste Austrittsöffnung auch lediglich indirekt erhitzt werden, indem zum Beispiel eine Heizschlange (elektrischer Widerstand) in diesem Bereich angeordnet wird, so zum Beispiel um die Austrittsöffnung oder innerhalb der Austrittsöffnung.

In Varianten kann die lokale Erhitzung auch anderweitig erreicht werden, insbesondere zum Beispiel durch eine anderweitige elektrische Beheizung, zum Beispiel mit Mikrowellen, Ultraschall, Infrarot und/oder elektrischer Widerstand zum lokalen Erhitzen des Wassers etc. Dem Fachmann sind dazu weitere Varianten bekannt.

Vorzugsweise wird die zweite Substanz über ein, die erste Austrittsöffnung umfassendes, erstes Rohr zudosiert. Bevorzugt wird der Wasserdampf und/oder das Heisswasser respektive, alternativ oder zusätzlich, der Katalysator über eine zweite Austrittsöffnung, insbesondere ein zweites Rohr zudosiert. Bevorzugt ist die erste Austrittsöffnung und die zweite Austrittsöffnung nahe beieinander angeordnet. Damit kann der Wasserstoffperoxiddampf und/oder das Heisswasser respektive der Katalysator in besonders geringen Mengen direkt dort zudosiert werden, wo er benötigt wird, namentlich bei der ersten Austrittsöffnung. Die Austrittsöffnungen können auch im Behälter angeordnet sein, insbesondere als Öffnungen im Bodenbereich des Behälters. Weiter kann eine Austrittsöffnung auch in einer Rotationswelle eines Rührwerks oder anderweitig mit einem Rührwerk verbunden sein. Dem Fachmann sind weitere Möglichkeiten bekannt.

In Varianten kann auf die zweite Austrittsöffnung auch verzichtet werden. Der Katalysator kann auch direkt dem Gemisch beigemengt werden, insbesondere bereits bevor die zweite Substanz zudosiert wird. Weiter kann auch ein heterogener Katalysator vorgesehen sein, welcher stationär im Bereich der ersten Austrittsöffnung vorgesehen ist. Dem Fachmann sind weitere Varianten bekannt.

In einem bevorzugten Verfahren sind das erste Rohr und das zweite Rohr koaxial geführt. Damit wird eine technisch besonders einfache Vorrichtung geschaffen, womit unter Niveau die zweite Substanz mit dem Katalysator, dem Heisswasser und/oder dem Wasserdampf zusammen geführt werden können. In der bevorzugten Ausführungsform wird der Heissdampf und/oder das Heisswasser im Aussenrohr geführt (im Aussenrohr bedeutet hier zwischen dem Innenrohr und dem Aussenrohr), während im Innenrohr eine wässrige Lösung der zweiten Substanz, insbesondere eines Peroxids, geführt wird. In Varianten können aber auch der Heissdampf und/oder das Heisswasser im Innenrohr geführt sein, während die zweite Substanz im Aussenrohr geführt ist. Insbesondere bei einer Verwendung von Heisswasser und/oder Heissdampf ist die koaxiale Rohrführung von besonderem Vorteil, da die zweite Substanz bereits innerhalb der Rohrleitung vorgeheizt werden kann. Damit kann die Blasenbildung weiter optimiert werden. Insbesondere kann damit die Blasenbildung bereits innerhalb des ersten Rohrs erreicht werden.

In Varianten können das erste Rohr und das zweite Rohr auch separat geführt sein. Dies kann insbesondere dann von Vorteil sein, wenn die zweite Substanz hochreaktiv ist. Weiter kann das zweite Rohr auch seitlich in das erste Rohr münden. Damit kann zum Beispiel der Katalysator respektive das Heisswasser/der Heissdampf in das erste Rohr der zweiten Substanz zugeführt werden. Das erste Rohr kann weiter statische Mischer umfassen, welche eine Durchmischung der ersten Substanz mit dem Katalysator respektive dem Heisswasser/dem Heissdampf optimieren. Damit kann weiter eine Katalysatormenge reduziert werden.

Vorzugsweise liegt eine Durchschnittstemperatur der Flüssigkeit während des Verfahrens unterhalb von 60 °C, vorzugsweise unterhalb von 40 °C, insbesondere bevorzugt unterhalb von 30 °C, besonders bevorzugt bei Raumtemperatur. Die Wahl einer solchen Durchschnittstemperatur hat den Vorteil, dass relativ wenig Wärmeenergie eingesetzt werden muss, womit einerseits ein langwieriger Aufheizvorgang vermieden und zudem Energie eingespart werden kann. Die konkrete Wahl der Durchschnittstemperatur kann in Abhängigkeit der eingesetzten zweiten Substanz erfolgen, um eine Reaktionsgeschwindigkeit zu steuern. Insbesondere bei einem Einsatz einer reaktiven zweiten Substanz zur Erzeugung von Gasblasen kann das Verfahren bei relativ tiefer Durchschnittstemperatur durchgeführt werden. Sofern zusätzlich Katalysatoren eingesetzt werden oder bei einer Zugabe der zweiten Substanz entsprechend der obigen Beschreibung lokal erhitzt wird, kann die Durchschnittstemperatur tendenziell tiefer gehalten werden. In Varianten kann die Temperatur auch höher als 60 °C gewählt werden (siehe unten).

In einer bevorzugten Ausführungsform des Verfahrens wird im zweiten Behälter ein Katalysator in wässriger Lösung vorgelegt. Über eine erste Zuführleitung wird eine Gasblasen erzeugende Substanz, vorzugsweise ein Peroxid, besonders bevorzugt Wasserstoffperoxid, ein Carbonat, ein Percarbonat oder eine Kombination der vorstehenden in den zweiten Behälter zudosiert. Über eine Verbindungsleitung wird ein im zweiten Behälter gebildetes Gas unter Niveau in den ersten Behälter geführt. In dieser Variante können mit einer besonders geringen Menge eines Katalysators die Gasblasen erzeugt werden. Als Katalysator wird vorzugsweise Eisen-III-Chlorid eingesetzt, alternativ können aber auch Eisenoxid, Ozon, Javelwasser, Kaliumjodid oder eine Mischung davon eingesetzt werden. Grundsätzlich kann auf den Katalysator auch verzichtet werden. In diesem Fall kann der zweite Behälter zum Beispiel erhitzt werden, um so eine Zersetzung der Gasblasen erzeugenden Substanz zu beschleunigen. Dem Fachmann sind auch andere Methoden bekannt.

Die Gasblasen können auch durch einen Mixvorgang oder einen Rührvorgang erreicht werden. Bei einem solchen Mixvorgang können gleichzeitig Mahleffekte erreicht werden, womit eine Trennung des bituminösen Materials begünstigt werden kann.

In einer besonders bevorzugten Ausgestaltung des Verfahrens wird nach dem Abriebverfahren das bituminöse Material, welches noch mit Sand, Splitt und Filler verunreinigt ist, mit Wasser versetzt und gemixt. Damit können Sand, Splitt und Filler von dem bituminösen Material getrennt werden. In Varianten können auch andere Verfahren eingesetzt werden. Der Mixvorgang wird vorzugsweise derart durchgeführt, dass Luftblasen in die Suspension eingetragen werden. Dies kann analog zu einem Haushaltsmixer erreicht werden, indem derart stark gerührt wird, dass sich eine tiefe Trombe bildet, womit Luft in die Suspension eingetragen werden kann. Mit den aufsteigenden Luftblasen kann das bituminöse Material an die Oberfläche getragen werden und zum Beispiel über einen Schlammsauger ausgetragen werden. In Varianten kann das bituminöse Material auch anderweitig abgetrennt werden. Die Luftblasen respektive Gasblasen können auch chemisch erzeugt oder über eine Pumpe oder dergleichen erzeugt werden.

Schliesslich kann auf die Erzeugung von Gasblasen auch generell verzichtet werden. In diesem Fall kann der Transport des bituminösen Materials an die Flüssigkeitsoberfläche auch durch Konvektion, einen Strömungsverlauf, durch Dichteunterschiede zwischen dem bituminösen Material und der Flüssigkeit etc. gewährleistet werden.

Weiter könnte das bituminöse Material auch durch apolare Tropfen einer ersten Substanz mit einer geringeren Dichte als die der polaren Flüssigkeit, nach oben getragen werden. Die apolaren Tropfen können zum Beispiel mit einem Alkan, einem wasserunlöslichen Alkohol etc. erzeugt werden. Die Tropfen können zum Beispiel in Form einer Emulsion im Bodenbereich des Behälters eingeführt werden. Dem Fachmann sind schliesslich weitere Möglichkeiten bekannt.

Schliesslich kann sowohl auf Gasblasen als auch auf apolare Flüssigkeitstropfen verzichtet werden. Das bituminöse Material, sofern dessen Dichte grösser ist, als diejenige der Flüssigkeit, kann auch im Bodenbereich des Behälters ausgetragen werden. Weiter kann das bituminöse Material aus der Flüssigkeit gefiltert, gesiebt, dekantiert etc. werden. Dem Fachmann sind dazu viele weitere Techniken bekannt.

Vorzugsweise umfassen die Gasblasen Umgebungsluft, Sauerstoff, Stickstoff und/oder Kohlendioxid. Insbesondere Sauerstoff und Kohlendioxid können besonders einfach mit chemischen Mitteln erzeugt werden. Alle Gase sind zudem kostengünstig in der Herstellung. Besonders bevorzugt wird im Falle eines Einsatzes einer Pumpe Umgebungsluft verwendet, da diese frei zur Verfügung steht.

Dem Fachmann sind jedoch auch andere Gase zum Erzeugen der Gasblasen bekannt. Insbesondere können auch Edelgase, Wasserstoff etc. eingesetzt werden. Auch gasförmige oder verdampfte organische Stoffe können prinzipiell eingesetzt werden. Damit kann gleichzeitig die Dichte des bituminösen Materials verringert werden, womit das Aufschwimmen auf der Flüssigkeit begünstig werden kann.

In einer weiteren bevorzugten Variante wird das Gemisch erhitzt, insbesondere direkt und/oder indirekt, vorzugsweise mit Warmwasser, Heisswasser und/oder Wasserdampf. Durch das Erhitzen kann das Ablösen des bituminösen Materials von der Matrix beschleunigt werden. Weiter können auch allfällige chemische Reaktionen, insbesondere hervorgerufen durch die zweite Substanz, begünstigt werden. Damit wird gesamthaft das Trennverfahren beschleunigt. Durch die Zeitersparnis kann damit wirtschaftlicher produziert werden. In einer ersten Variante kann der Behälter direkt beheizt werden. Die Beheizung kann direkt, durch Vorheizen der Flüssigkeit, durch Einleiten von Heissdampf in das Gemisch erfolgen, oder über eine Behälter-Aussenwand. Dem Fachmann sind weitere Varianten bekannt.

In Varianten kann auf das Erhitzen des Gemischs auch verzichtet werden. Insbesondere in einem Verfahren bei welchem der Sekundärrohstoff vorgängig einem Abriebverfahren unterworfen wurde, haben Versuche gezeigt, dass auf das Erhitzen verzichtet werden kann, insbesondere aus ökonomischer und ökologischer Sicht - dem Fachmann ist klar, dass ein Erhitzen das Verfahren dennoch typischerweise begünstigen kann. Es wurde insbesondere erkannt dass das Verfahren mit dem Sekundärrohstoff, welcher aus einem Abriebverfahren aus Strassenbelagsmaterial gewonnen wurde, namentlich dem Abrieb, besonders ökologisch und ökonomisch durchgeführt werden kann, indem der Abrieb ausschliesslich mit Wasser versetzt wird und bei Raumtemperatur derart gemixt wird, dass Luft in die Suspension eingebracht wird, welche als Luftblasen zusammen mit dem bituminösen Material an die Flüssigkeitsoberfläche aufsteigen. Dort kann das bituminöse Material zum Beispiel in Form eines Schaums mit einem Schlammsauger abgesaugt werden. Dem Fachmann ist jedoch klar, dass das Verfahren durch chemische Zusätze, durch Erhitzen etc. auch effizienter gestaltet werden könnte.

In weiteren Varianten können auch andere Mittel, zum Beispiel Mikrowellenenergie, elektrische Energie, Brennstoffe, insbesondere zum Beispiel Teile des bituminösen Materials etc. eingesetzt werden. Im Falle der Verbrennung von Teilen des bituminösen Materials, insbesondere z. B. einer Fraktion des bituminösen Materials, kann mit der überschüssigen Wärme elektrische Energie produziert werden, welche für das Verfahren oder anderweitig eingesetzt werden kann.

In einer weiteren bevorzugten Variante wird das Gemisch auf eine Temperatur über 50 °C erhitzt. Durch eine Erhöhung der Temperatur des gesamten Gemischs wird zwar mehr Energie aufgewendet, dafür kann das Verfahren in kürzerer Zeit durchgeführt werden. Experimente haben gezeigt, dass ab 50 °C das Verfahren gut funktioniert. Ideal sind Temperaturen von über 80 °C, insbesondere von über 90 °C, zum Beispiel bis zu 100 °C. Je nach Art des Sekundärrohstoffs und je nach Zugabe von Additiven wie den obig beschriebenen Peroxiden, Carbonaten, Bicarbonaten etc. kann das Verfahren auch bei Temperaturen unter 50 °C durchgeführt werden respektive kann das Gemisch lediglich lokal erhitzt werden (siehe oben). Je nach eingesetzter zweiter Substanz, insbesondere bei der Verwendung von Wasserstoffperoxid, kann durch eine tiefere Temperatur gegebenenfalls eine Überreaktion verhindert werden. Hierbei kann zwischen der Temperatur des Gemischs und der Zugaberate (Konzentrationsänderung) der zweiten Substanz abgewogen werden, wobei typischerweise bei höherer Temperatur die Zugaberate gesenkt werden kann.

Vorzugsweise wird das Gemisch, insbesondere zur Ertragsmaximierung, mechanisch durchmischt. Mit der Durchmischung kann das bituminöse Material einerseits auch mechanisch gelöst werden. Weiter kann damit eine durch die zweite Substanz hervorgerufene chemische Reaktion schneller umgesetzt werden. Gesamthaft wird damit auch das Verfahren selbst beschleunigt. Vorzugsweise wird damit zusätzlich der Ertrag des bituminösen Materials erhöht.

In Varianten kann auf die mechanische Durchmischung auch verzichtet werden.

Bevorzugt wird das Gemisch mit physikalischen Mitteln, insbesondere durch Schall, Ultraschall und/oder Mikrowellen beaufschlagt. Damit kann ebenfalls der Ablöseprozess des bituminösen Materials von der Matrix optimiert werden. Dazu ist es von Vorteil, wenn die Frequenz derart eingestellt ist, dass bituminöse Tröpfchen respektive Partikel optimal angeregt werden. Die Frequenz wird daher vorzugsweise kleiner als 200 kHz, besonders bevorzugt keiner als 100 kHz, insbesondere kleiner als 50 kHz gewählt. Gegebenenfalls kann es auch sinnvoll sein, mikroskopische Partikel anzuregen, zum Beispiel diejenigen, an welchen das bituminöse Material anhaftet. In diesem Fall können auch Frequenzen über 200 kHz vorgesehen sein.

In Varianten kann auf die physikalischen Mittel auch verzichtet werden.

Das Verfahren wird vorzugsweise diskontinuierlich durchgeführt. Dazu wird eine Menge des Sekundärrohstoffs, insbesondere Strassenbelagsmaterial, in einen Behälter gegeben und mit der Flüssigkeit, insbesondere Wasser, überdeckt. Das sich an der Wasseroberfläche ansammelnde bituminöse Material wird, vorzugsweise kontinuierlich, abgeschöpft. In Varianten kann das Verfahren auch kontinuierlich durchgeführt werden. Dazu kann der Sekundärrohstoff mit Fördermitteln, zum Beispiel über ein Förderband, in einen Behälter gefördert werden und über einen Schneckenförderer kontinuierlich wieder aus dem Behälter ausgetragen werden. Dem Fachmann sind Techniken zur Optimierung der Verweilzeit des Sekundärrohstoffs im Behälter bekannt.

Vorzugsweise wird das Verfahren möglichst ökologisch und ökonomisch durchgeführt. Damit wird die Umwelt weniger belastet und das Verfahren kann relativ kostengünstig durchgeführt werden.

Bevorzugt wird nach der Abtrennung des bituminösen Materials die Flüssigkeit, insbesondere das Wasser, zur Wiederverwendung im Verfahren, insbesondere für einen nächsten Batch, aufbereitet. Die Aufbereitung der Flüssigkeit kann derart gestaltet sein, dass die Anforderungen an die Wiederverwendung im Verfahren erfüllt sind. Sofern zum Beispiel Kochsalz im Wasser gelöst ist, um die Dichte zu erhöhen, muss dieses im Rahmen der Aufbereitung nicht aus dem Wasser entfernt werden. Typischerweise kann es ausreichen, das Wasser durch ein Absetzbecken laufen zu lassen oder mit einem Zyklon zu zentrifugieren, um Schwebstoffe zu entfernen. In Varianten kann auf die Aufbereitung auch ganz verzichtet werden, insbesondere wenn die Verunreinigungen das Verfahren nicht negativ beeinflussen. In diesem Fall kann die Flüssigkeit direkt wieder im Verfahren verwendet werden oder entsorgt werden.

Vorzugsweise wird mit einem oder mehreren Wärmetauschern eine Prozesswärme zurückgewonnen. Diese wird vorzugsweise aus der Flüssigkeit, insbesondere dem Wasser zurückgewonnen. Dem Fachmann sind entsprechende Techniken hinreichend bekannt. Die zurückgewonnene Wärme kann direkt zum Vorheizen der Flüssigkeit für das Verfahren oder anderweitig (zur Raumheizung, Warmwasserboiler etc.) eingesetzt werden.

In Varianten kann auf die Wärmerückgewinnung auch verzichtet werden.

Das bituminöse Material wird vorzugsweise an der Flüssigkeitsoberfläche, insbesondere in Form eines Schaums, kontinuierlich oder diskontinuierlich abgeschöpft. Insbesondere in einer Varianten, bei welcher Gasblasen erzeugt werden, wird typischerweise ein Schaum an der Flüssigkeitsoberfläche erzeugt, in welchem sich die Partikel des bituminösen Materials befinden. Dieser Schaum kann mit einem Schwert von der Flüssigkeitsoberfläche abgefangen werden. Weiter kann der Schaum auch durch ein geeignetes Rührwerk in Richtung eines Überlaufs getrieben werden. Dem Fachmann sind auch dazu weitere Varianten bekannt.

In Varianten kann das bituminöse Material auch über einen Schlammsauger oder auch anderweitig aus dem Gemisch ausgetragen werden (siehe oben). Der Einsatz eines Schlammsaugers hat den Vorteil, dass dieser zwischen 1 und 100 mm über der Wasseroberfläche positioniert wird, womit aufgewühlter Sand oder Filler in geringerem Masse ausgetragen wird. Damit wird bituminöses Material mit höherer Reinheit erhalten.

Vorzugsweise wird das bituminöse Material nach der Abtrennung von der Matrix einem weiteren Reinigungsschritt unterzogen. Das bituminöse Material kann nach dem Trennverfahren Verunreinigungen umfassen, insbesondere Sand, Filler und Zusatzstoffe. Die Trennung kann mit dem Fachmann bekannten Techniken erfolgen.

Je nach Verwendung kann das bituminöse Material auch direkt nach dem Trennverfahren zur Herstellung von, gegebenenfalls spezifischen, Asphaltbelägen eingesetzt werden, bei welchen die Fremdstoffe im bituminösen Material nicht stören oder sogar gewünscht sind.

Bevorzugt wird das bituminöse Material in einer Flüssigkeit, insbesondere in Wasser aufgeschlämmt und gemischt respektive gemixt, um Filler, Sand und andere Stoffe vom Bitumen abzutrennen. Hierzu kann das bituminöse Material vorgängig einem Mahlvorgang unterworfen werden - ob der Mahlvorgang eingesetzt wird, kann von der gewünschten Reinheit oder der Korngrösse des bituminösen Materials etc. abhängen. Auf den Mahlvorgang kann auch verzichtet werden. Besonders bevorzugt wird eine Flüssigkeit eingesetzt, welche einerseits eine höhere Dichte als das Bitumen und anderseits eine geringere Dichte als die Filler respektive Sand und Splitt aufweist. Damit kann eine optimale Trennung innerhalb der Flüssigkeit derart erreicht werden, dass das Bitumen an die Flüssigkeitsoberfläche aufsteigt und die Filler, der Sand, der Splitt und gegebenenfalls andere Stoffe mit höherer Dichte sich am Behälterboden sammeln. Die Flüssigkeit umfasst bevorzugt Wasser, in welchem eine die Dichte erhöhende erste Substanz gelöst ist (siehe oben). Auf die Beeinflussung der Dichte kann auch verzichtet werden. Die Abtrennung kann auch über eine geeignete Wahl der Strömung erfolgen, wobei Teile geringerer Dichte (Bitumen) von Teilen mit grösserer Dichte (Filler, Sand etc.) getrennt werden können. Dazu kann zum Beispiel durch ein Rührwerke erzeugter Strom, insbesondere ein Auftrieb vorgesehen sein. Bevorzugt wird dieser weitere Reinigungsschritt ohne chemische Zusatzstoffe durchgeführt. In Experimenten konnte gezeigt werden, dass insbesondere bei gemäss dem Verfahren aus Strassenbelagsmaterial gewonnenes bituminöses Material in diesem weiteren Reinigungsschritt in der Regel auf die zweite Substanz (Trennmittel, siehe oben) verzichtet werden kann. Damit kann dieser weitere Reinigungsschritt besonders ökonomisch und ökologisch durchgeführt werden. Auch wenn bitumenhaltiges Strassenbelagskonzentrat eingesetzt wird, welches mechanisch aufkonzentriert wurde (durch das Abriebverfahren), kann auf ein Trennmittel, das heisst die zweite Substanz, gegebenenfalls verzichtet werden. Durch ein intensives Mixen können weiter Luftblasen in die Suspension eingetragen werden, welche wiederum die Trennwirkung verbessern können. Damit werden Luftblasen aufgenommen, welche wiederum einen bituminösen Schlamm oder Schaum erzeugen, welcher weniger Sand und Filler enthält.

In Varianten kann das bituminöse Material nach der Abtrennung von der Matrix durch zentrifugieren oder über einen Fliehkraftabscheider (Zyklon) von Fremdkörpern, insbesondere von Filler und Sand, getrennt werden. Damit kann das bituminöse Material wieder universell für die Herstellung von Asphaltbelägen eingesetzt werden. Die Abtrennung muss nicht zwingend durch Zentrifugieren erfolgen, dem Fachmann sind auch andere Techniken bekannt.

In Varianten kann auf die Abtrennung der Fremdkörper auch verzichtet werden.

Vorzugsweise durchläuft der Sekundärrohstoff zum Erreichen einer grösseren Trennleistung das Verfahren mehrfach. Damit kann einerseits eine höhere Ausbeute an bituminösem Material erreicht werden. Anderseits kann der Sand und Splitt besser gereinigt werden, womit dieser ebenfalls wieder eingesetzt werden kann. Weiter kann auch mit dem abgetrennten bituminösen Material das Verfahren wiederholt durchlaufen werden, womit Filler und Sand aus dem bituminösen Material weiter entfernt werden können, um eine grössere Reinheit des bituminösen Materials zu erreichen.

In Varianten kann auf den zweiten Durchlauf verzichtet werden, insbesondere wenn der erste Verfahrensdurchlauf hinreichend effizient war.

Bevorzugt wird das Verfahren bei Unterdruck durchgeführt. Damit wird insbesondere ein Verfahren, bei dem das bituminöse Material mit Gasblasen an die Oberfläche der Flüssigkeit getragen wird, begünstigt respektive beschleunigt.

In Varianten kann auf die Durchführung des Verfahrens bei Unterdruck auch verzichtet werden.

Vorzugsweise umfasst der Sekundärrohstoff Splitt, Sand und Filler. Diese Bestandteile kommen insbesondere bei Strassenbelagsmaterial vor, können aber grundsätzlich auch in anderen Sekundärrohstoffen vorkommen.

Insbesondere bei der Herstellung von Strassenbelagsmaterial ist das Ziel, die Komponenten so zu wählen und derart zu verarbeiten, dass das bituminöse Material bestmöglich an der Matrix anhaftet. Dazu werden üblicherweise Filler respektive Haftvermittler eingesetzt. Diese Zusatzstoffe erschweren prinzipiell die Ablösung von bituminösem Material von der Matrix - das vorliegende Verfahren hat jedoch überraschend gezeigt, dass trotz dieser erschwerenden Umstände auch Strassenbelagsmaterial in bituminöses Material und Matrix aufgetrennt werden kann.

In Varianten kann der Sekundärrohstoff auch keinen Splitt, keinen Sand und/oder keinen Filler umfassen.

Der Sekundärrohstoff umfasst vorzugsweise einen Wassergehalt von weniger als 5 gew. %, insbesondere vorzugsweise weniger als 1 gew. %, besonders bevorzugt weniger als 0.1 gew. %. Auch hier ist der geringe Wassergehalt prinzipiell nachteilig für die Abtrennung des bituminösen Materials von der Matrix. Ein höherer Wassergehalt begünstigt typischerweise das Abtrennen des bituminösen Materials, insbesondere da das bituminöse Material apolar und das Wasser polar ist. Es hat sich jedoch überraschend gezeigt, dass das Verfahren dennoch geeignet ist, auch bei Sekundärrohstoffen mit besonders geringem Wassergehalt das bituminöse Material abzutrennen.

In Varianten kann der Wassergehalt des Sekundärrohstoffs auch höher als 5 gew.% sein.

Der Sekundärrohstoff liegt in einer bevorzugten Ausführungsform des Verfahrens vorzugsweise als Bruchstücke vor, wobei zumindest ein Anteil von 10 gew.%, vorzugsweise mindestens 20 gew. %, der Bruchstücke einen minimalen Durchmesser von mehr als 10 mm aufweisen.

Auch hier ist prinzipiell eine grössere Bruchstückgrösse typischerweise nachteilig für das Trennverfahren. Es hat sich nun aber in Versuchen überraschend gezeigt, dass der Sekundärrohstoff nicht beliebig klein zerkleinert werden muss, um das Verfahren effizient durchführen zu können.

Insbesondere bei Abbruchmaterial im Strassenbau können die Bruchstücke unmittelbar nach dem Strassenabbruch sehr gross sein. Für die Durchführung des Verfahrens sind diese zu zerkleinern. Die Bruchstückgrösse muss nun jedoch nicht beliebig klein sein, sondern kann durchaus eine Grösse bis zu 80 mm oder mehr aufweisen. Damit kann das Verfahren kostengünstig durchgeführt werden. Weiter kann dadurch eine Zerstörung des Splits und Sandes verhindert werden, womit auch diese Materialien nach der Trennung wieder verwendet werden können.

In Varianten können die Bruchstücke aber auch kleiner sein oder in der obig angegebenen Grösse mit geringerem Anteil an der Gesamtmasse vorliegen. Die Bruchstücke können auch zu kleineren Partikeln gebrochen, gemahlen oder anderweitig zerkleinert werden.

Vorzugsweise weisen mindestens 20 gew.%, vorzugsweise mindestens 30 gew.%, insbesondere bevorzugt mindestens 40 gew.% der Matrix eine Korngrösse von mehr als 5 mm auf. Auch hier gilt das obig Gesagte, wonach prinzipiell grosse Korngrössen für das Verfahren nachteilig sind, jedoch sich das vorliegende Verfahren als überraschend effizient auch bei grossen Korngrössen erwiesen hat.

In Varianten können auch weniger als 20 gew.% der Matrix eine Korngrösse von mehr als 5 mm aufweisen.

Bevorzugt umfasst der Sekundärrohstoff eine oder mehrere der folgenden Komponenten: Polymere, Armierungsfasern, insbesondere Cellulosefasern und/oder Aramidfasern, Kalkhydrat, Juvenatoren. Solche Zusatzstoffe respektive Komponenten werden typischerweise bei Asphaltbelägen eingesetzt. Besonders Polymere und Kalkhydrat sind typisch in den Asphaltbelägen zu finden. Diese Zusatzstoffe stellen sicher, dass das bituminöse Material besonders gut an dem Matrixmaterial, insbesondere Splitt und Brechsand, anhaftet. Das vorliegende Verfahren erwies sich auch unter diesen, die Trennung erschwerenden Umständen als effizient.

Keine der Komponenten ist für die Durchführung des Verfahrens notwendig. Allerdings konnte gezeigt werden, dass das Verfahren auch dann funktioniert, wenn diese Komponenten zum Teil oder alle im Sekundärrohstoff vorhanden sind.

Vorzugsweise beträgt der Anteil an Kalkhydrat im Sekundärrohstoff zwischen 0.5 und 3 gew.%, vorzugsweise zwischen 1 und 2 gew.%. In Varianten kann der Anteil an Kalkhydrat auch höher als 3 gew.% oder tiefer als 0.5 gew.% sein.

Der Anteil an Polymeren im bituminösen Material beträgt vorzugsweise mindestens 2 gew.%, besonders vorzugsweise mindestens 4 gew. %, insbesondere zwischen 5 und 7 gew.%. In Varianten kann der Anteil an Polymeren auch unter 2 gew.% oder über 7 gew.% liegen.

Bevorzugt weist der Sekundärrohstoff eine Dichte zwischen 1.2 g/cm³ und 2.6 g/cm³, vorzugsweise zwischen 1.4 g/cm³ und 2.4 g/cm³ auf. In Varianten kann die Dichte auch kleiner als 1.2 g/cm³ respektive grösser als 2.6 g/cm³ sein.

Vorzugsweise ist ein Anteil an VOC respektive VVOC im Sekundärrohstoff kleiner als 0.1 gew. %, vorzugsweise kleiner als 0.01 gew. %. Mit VOC und VVOC werden flüchtige organische Verbindungen bezeichnet. Vorliegend fallen unter VVOC organische Verbindungen mit einem Siedebereich mit einer Obergrenze von 100 °C. Unter VOC fallen organische Verbindungen mit einem Siedebereich zwischen 100 °C und 260 °C. Die VOC respektive VVOC sind für die Abtrennung von bituminösem Material von der Matrix hilfreich, da diese ebenso apolar sind und damit als Lösungsvermittler für das bituminöse Material dienen. Durch die VOC respektive VVOC wird eine Oberfläche der bituminösen Partikel angelöst, womit eine Haltekraft zur Matrix reduziert werden kann. Nun wurde aber entdeckt, dass mit dem vorliegenden Verfahren auch bituminöses Material von einer Matrix getrennt werden kann, welches kaum oder keine VOC respektive VVOC umfasst.

Das bituminöse Material im Strassenbelagsmaterial wird in der Herstellung des Asphalts typischerweise mit einer Temperatur von 120 °C bis 230 °C auf Sand, Split etc. aufgetragen, welches auf 400 °C vorgeheizt wurde (andere Parameter sind auch möglich). Damit wird bereits während der Herstellung des Asphalts ein Grossteil der VOC respektive der VVOC verflüchtigt. Restmengen an volatilen organischen Verbindungen diffundieren im Laufe der Zeit aus dem Belag hinaus, so dass dieser bei einer anstehenden Sanierung typischerweise praktisch keine volatilen organische Verbindungen mehr umfasst. Es ist nun insbesondere zu beachten, dass durch das weitgehende Fehlen von leichteren Ölen, d. h. von VOC respektive VVOC in dem (alten) Strassenbelagsmaterial ein Lösungsvermittler fehlt, welcher helfen würde, das bituminöse Material von der Matrix zu lösen. Überraschenderweise kann mit dem vorliegenden Verfahren das bituminöse Material nun auch in Abwesenheit von VOC respektive von VVOC in effizienter Weise von der Matrix gelöst werden.

In Varianten kann das Verfahren natürlich auch auf Sekundärrohstoffe angewandt werden, welche einen höheren Anteil an VOC respektive VVOC als 0.1 gew.% aufweisen.

Vorzugsweise weist das bituminöse Material im Strassenbelagsmaterial weniger als 0.1 gew.%, vorzugsweise weniger als 0.01 gew.% destillierbare Erdölbestandteile respektive Kohlewasserstoffe auf. Es hat sich überraschend gezeigt, dass das Verfahren auch dann gut funktioniert, wenn die destillierbaren Erdölbestandteile respektive Kohlewasserstoffe sehr gering sind - damit kann das Verfahren auch weitgehend ohne Lösevermittler effizient durchgeführt werden.

In Varianten kann der Anteil der destillierbaren Erdölbestandteile respektive Kohlewasserstoffe auch höher als 0.1 gew.% sein.

Bevorzugt ist eine kinematische Viskosität bei 60°C des bituminösen Materials höher als 400 mm²/s, vorzugsweise höher als 1'000 mm²/s. Besonders bevorzugt ist die kinematische Viskosität des bituminösen Materials im Sekundärrohstoff höher als 5'000 mm²/s, insbesondere bevorzugt höher als 10'000 mm²/s. Die kinematische Viskosität kann in der Anwendung des vorliegenden Verfahrens sogar höher als 25'000 mm²/s sein. Solche Werte für die kinematische Viskosität werden typischerweise in bituminösem Material in altem Strassenbelagsmaterial erreicht. Auch hier steht prinzipiell eine hohe kinematische Viskosität des bituminösen Materials der effizienten Trennung der Matrix entgegen - mit dem vorliegenden Verfahren kann überraschenderweise auch bituminöses Material mit sehr hoher kinematischer Viskosität von der Matrix getrennt werden.

Dem Fachmann ist auch hier klar, dass das Verfahren auch bei geringerer kinematischer Viskosität als 400 mm²/s durchgeführt werden kann.

Vorzugsweise ist eine Dichte des bituminösen Materials grösser als 1'000 kg/m³, vorzugsweise grösser als 1'010 kg/m³. Zusammen mit der Viskosität und dem geringen Anteil an flüchtigen organischen Verbindungen steigt typischerweise beim bituminösen Material auch die Dichte. Es hat sich in Experimenten gezeigt, dass auch bei einer Dichte des bituminösen Materials, welche höher als diejenige von Wasser ist, eine Abtrennung von der Matrix möglich und insbesondere wirtschaftlich umsetzbar ist. Es konnte sogar gezeigt werden, dass eine Abtrennung an der Wasseroberfläche erreicht werden kann, insbesondere zum Beispiel in einem Verfahren, bei welchem Gasblasen in dem Gemisch erzeugt werden. Das Verfahren kann jedoch auch mit einem Sekundärrohstoff durchgeführt werden, bei welchem das bituminösem Material eine geringere Dichte als Wasser, das heisst als 1'000 kg/m³ aufweist.

Vorzugsweise weist das bituminöse Material einen Erweichungspunkt von mehr als 50 °C, insbesondere mehr als 70 °C, besonders bevorzugt von mehr als 90 °C auf. Der Erweichungspunkt des bituminösen Materials in einem Strassenbelag steigt typischerweise mit steigendem Alter an. In Varianten kann der Erweichungspunkt auch kleiner als 50 °C sein.

Das mittels des Verfahrens gewonnene bituminöse Material, welches aus einem Sekundärrohstoff abgetrennt worden ist, wird vorzugsweise für die Herstellung von Asphalt eingesetzt. Sofern der Sekundärrohstoff bereits asphaltiertes Strassenbelagsmaterial umfasst, liegt der Vorteil darin, dass gegebenenfalls Verunreinigungen aus dem bituminösen Material nicht entfernt werden müssen, da solche ohnehin dem Asphalt wieder zugeführt würden. Damit wird eine besonders wirtschaftliche Wiederverwendung von bituminösem Material aus Strassenbelagsmaterial geschaffen. Dem Fachmann sind jedoch auch andere Anwendungen des rezyklierten bituminösen Materials bekannt (siehe oben). Sofern notwendig kann das bituminöse Material dazu auch aufbereitet respektive gereinigt werden.

Eine Vorrichtung zur Durchführung des Verfahrens umfasst im Wesentlichen einen Behälter, in welchen die Flüssigkeit und der Sekundärrohstoff gegeben werden können. Der Behälter kann in einer bevorzugten Ausführungsform zur Behälteröffnung hin eine Verjüngung aufweisen. Dies hat den Vorteil, dass das aufschwimmende bituminöse Material auf einer geringeren Fläche aufliegt und somit in höherer Konzentration abgeschöpft werden kann. Weiter besteht damit der Vorteil, dass mit einer geringeren Menge Flüssigkeit der Sekundärrohstoff abgedeckt werden kann. Damit kann das Verfahren gesamthaft mit einem geringeren Volumen durchgeführt werden. Ein weiterer Vorteil liegt darin, dass beim Rühren eine geringere Bewegung der Flüssigkeitsoberfläche erfolgt, womit auch verhindert werden kann, dass das abgetrennte bituminöse Material mit dem Sekundärrohstoff unterhalb der Flüssigkeitsoberfläche in Kontakt kommt und an diesem wieder anhaftet. In Varianten kann der Behälter auch ohne die Verjüngung auskommen.

In einer weiteren bevorzugten Ausführungsform umfasst die Vorrichtung zur Durchführung des Verfahrens einen Schwertwäscher oder eine Archimedesschraube, womit der bitumenhaltige Sekundärrohstoff durch die Flüssigkeit hindurch transportiert und ausgetragen werden kann.

Vorzugsweise wird das Trennungsverfahren mit Sensoren überwacht. Die Überwachung kann online, kontinuierlich oder diskontinuierlich durchgeführt werden.

Eine kontinuierliche Überwachung kann zum Beispiel durch den Einsatz von Sensoren erfolgen, welche während des Verfahrens in Kontakt mit dem Gemisch sind. Eine diskontinuierliche Überwachung kann zum Beispiel durch eine regelmässige Probenentnahme erfolgen, welche jeweils analysiert wird. Dem Fachmann sind viele geeignete Sensoren bekannt, welche zur Überwachung des Prozesses eingesetzt werden können. Einerseits können damit primäre Faktoren, wie zum Beispiel die effektive Trennung des Bitumens von der Matrix überwacht werden, womit zum Beispiel festgestellt werden kann, wenn das Trennverfahren beendet ist (ob der Kiesel/Sand sauber ist). Dies ermöglicht die Optimierung der Verweilzeit der Materialien im Reaktor sowie die Optimierung der Menge der zuzugebenden Substanzen wie Bicarbonate, Peroxide etc.

Anderseits oder zusätzlich können aber auch sekundäre Faktoren, wie zum Beispiel die Temperatur, Dichte, pH, Leitfähigkeit, Brechungsindex etc. sowie Änderungsraten davon und dergleichen überwacht werden. In einer bevorzugten Ausführungsform des Verfahrens erfolgt eine Zugabe einer ersten und/oder zweiten Substanz auf Basis der mit dem Sensor gemessenen Werte. Damit kann das Verfahren besonders effizient und unter optimiertem Ressourceneinsatz (Energie, Zeit, Zusatzstoffe etc.) durchgeführt werden.

In Varianten kann auf die Überwachung mit Sensoren auch verzichtet werden. In diesem Fall kann die Überwachung des Verfahrens auch visuell erfolgen.

Vorzugsweise umfasst der Sensor einen optischen Sensor, insbesondere einen UV-Vis-Fluoreszenzsensor, Röntgenfluoreszenzsensor, Raman-Spektroskopiesensor, Bilderkennungsfotografie, NIR etc. In Varianten können auch andere dem Fachmann bekannte Sensoren eingesetzt werden. Insbesondere kann bei einer Probenahme auch ein Verbrennungstest mit Detektion von Verbrennungsgasen durchgeführt werden (zum Beispiel durch optische Spektroskopie (NIR oder andere) usw.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: eine schematische Darstellung eines Vertikalschnitts durch eine Asphaltschicht;
- Fig. 2: eine schematische Darstellung eines Vertikalschnitts durch gebrochenen Asphalt in der Form eines Konglomerats;
- Fig. 3: eine schematische Darstellung eines Vertikalschnitts durch gefrästen Asphalt;
- Fig. 4: eine schematische Darstellung eines Vertikalschnitts durch einen Behälter mit einem Gemisch;
- Fig. 5: eine schematische Darstellung eines Vertikalschnitts durch einen Behälter während des Trennverfahrens respektive der Disaggregierung;
- Fig. 6: eine schematische Darstellung eines Vertikalschnitts durch einen Behälter während des Trennverfahrens in grösserem Detail;
- Fig. 7: eine schematische Darstellung eines Vertikalschnitts durch eine Vorrichtung zur kontinuierlichen Durchführung des Verfahrens;
- Fig. 8: eine schematische Darstellung einer ersten Ausführungsform einer Vorrichtung zur Durchführung des Verfahrens mit einer Einrichtung zur Erzeugung von Gasblasen;
- Fig. 9: eine schematische Darstellung einer zweiten Ausführungsform einer Vorrichtung zur Durchführung des Verfahrens mit einem separaten Reaktor zur Erzeugung von Gasblasen;
- Fig. 10: eine schematische Darstellung einer dritten Ausführungsform einer Vorrichtung zur Durchführung des Verfahrens, bei welcher das Bitumen an der Flüssigkeitsoberfläche abgeschöpft wird; und
- Fig. 11: eine schematische Darstellung einer vierten Ausführungsform einer Vorrichtung zur Durchführung des Verfahrens, wobei das Bitumen am Behälterboden gesammelt und ausgetragen wird.

Grundsätzlich sind in den Figuren gleiche Teile mit gleichen Bezugszeichen versehen.

### Wege zur Ausführung der Erfindung

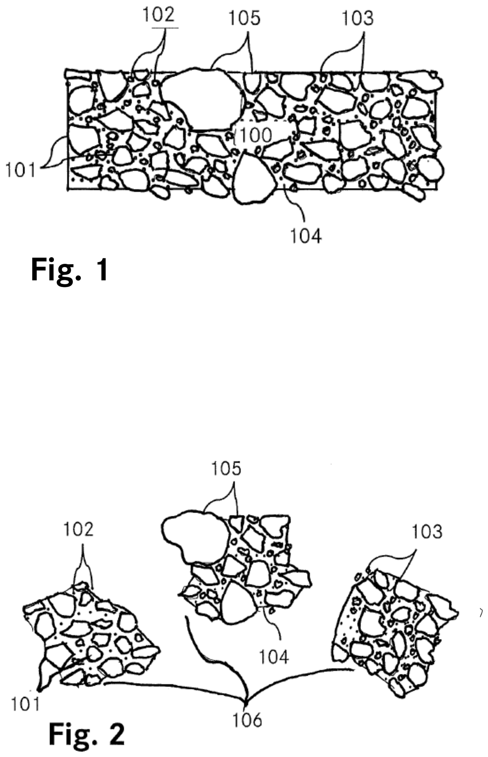

Die Figur 1 zeigt einen Vertikalschnitt durch eine Asphaltschicht 100 in der Form eines Konglomerats. Diese umfasst Konglomerate 101, welche mehr oder weniger grosse Kieselsteine, Sande 102, Filler 103 und bituminöses Material 104 umfasst. Die Fahrbahn ist auf der Oberfläche 105. Mit zunehmendem Verschleiss werden die Konglomerate 101 abgerundet, womit die Strasse rutschig wird und saniert werden muss. Der Strassenbelag wird entweder abgefräst oder abgebrochen.

Die Figur 2 zeigt einen Vertikalschnitt durch eine gebrochene Asphaltschicht. Die Bruchstücke 106 sind relativ gross und umfassen nach wie vor eine Vielzahl an Sandpartikel und mehrere Kieselsteine 102.

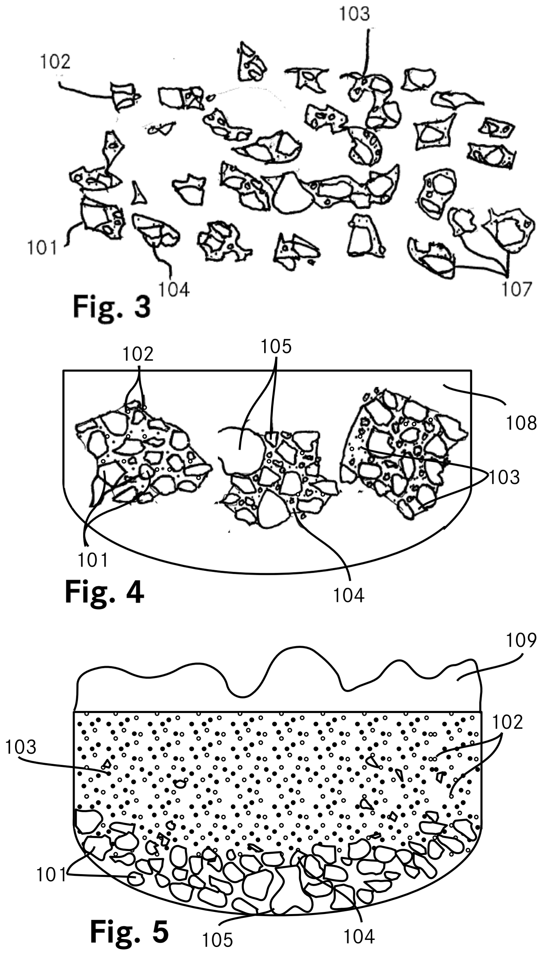

Die Figur 3 zeigt einen Vertikalschnitt durch eine gefräste Asphaltschicht. Die Partikel des Fräsguts 107 sind weitaus kleiner als diejenige der gebrochenen Asphaltstücke der Figur 2. Ein Partikel 107 umfasst nun noch ein oder wenige Kieselsteine. Der Staubanteil wird durch den Fräsvorgang erhöht, womit typischerweise im Trennverfahren das bituminöse Material mit dem Staub angereichert wird.

Die Figur 4 zeigt einen Vertikalschnitt durch einen Behälter mit einem Gemisch. Das Gemisch umfasst eine wässrige Lösung 108 sowie Bruchstücke 106 des Strassenbelags gemäss der Figur 2.

Die Figur 5 zeigt einen Vertikalschnitt durch einen Behälter während der Disaggregierung/des Trennverfahrens. Die Bruchstücke 106 sind bereits in bituminöses Material und die Matrix aufgelöst. Die Kieselsteine 101 und der Sand 102 sammeln sich am Boden, während sich das von der Matrix gelöste bituminöse Material im Schaum 109 sammelt.

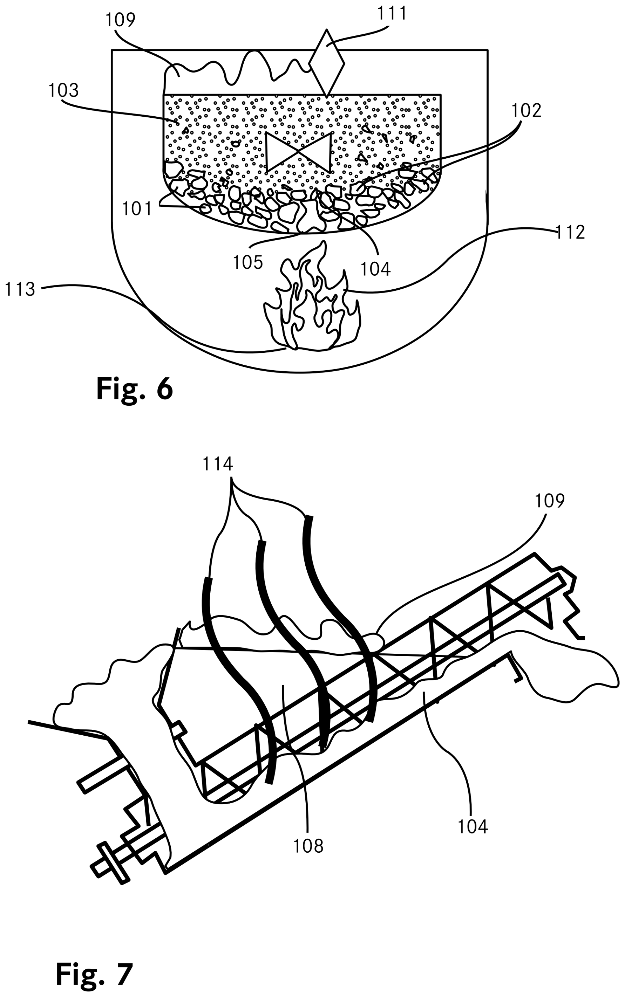

Die Figur 6 zeigt einen Vertikalschnitt durch einen Behälter während der Disaggregierung/des Trennverfahrens in grösserem Detail. Die Kieselsteine 101 und der Sand 102 sammeln sich während des Verfahrens am Boden des Behälters. Im Behälter ist vorliegend ein Mischer 110 vorgesehen, womit das Gemisch umgewälzt werden kann. Damit kann die Effizienz des Verfahrens gesteigert werden. Mit einem Abschöpfsystem 111, zum Beispiel einem Schlammsauger, wird der sich bildende Schaum und damit das von der Matrix getrennte bituminöse Material, stetig abgeschöpft. Weiter ist unter dem Behälter eine Wärmequelle 112 angeordnet, womit das Gemisch während des Verfahrens erhitzt werden kann. Mit einem Rohr 114 kann ein reaktiver Stoff, insbesondere ein Trennungsmittel wie ein Peroxid derart zugeführt werden, dass dieses direkt zum Asphalt gelangt. Das Peroxid kann somit kontinuierlich oder durch aufeinanderfolgende Zugaben nahe an den Asphalt gebracht werden, womit dieses effektiv zur Trennung des bituminösen Materials von der Matrix eingesetzt werden kann..

Die Figur 7 zeigt einen Vertikalschnitt durch eine Vorrichtung zur kontinuierlichen Durchführung des Verfahrens. Die Vorrichtung umfasst einen Eintrag für den bitumenhaltigen Sekundärrohstoff 104. Dieser wird über eine Archimedesschraube entlang eines Behälters schräg nach oben, durch die wässrige Lösung 108 hindurch gefördert und schliesslich über einen Überlauf aus dem Behälter ausgetragen. Statt der Archimedesschraube kann auch ein Schwertwäscher eingesetzt werden.

Nachfolgend sind die zum Trennverfahren durchgeführten Experimente beschrieben. Als Sekundärrohstoff wurde in den folgenden Experimenten jeweils Fräsgut eines Strassenbelags verwendet.

In einem ersten Versuch wurden 5 g Fräsgut eines Strassenbelags gebrochen und in einem Behälter mit 10 ml Wasserstoffperoxid à 3% versetzt. Der Behälter wurde in einen Wasser enthaltenden Dampfkochtopf gegeben und 5 Minuten gekocht. Im Behälter fand sich auf der Wasserstoffperoxidlösung ein Schaum mit 1 g Trockenmasse, einschliesslich Bitumen und Filler.

In einem zweiten Versuch mit einer Wasserbadheizung wurde 300 g Fräsgut eines Strassenbelags gebrochen und in ein Becherglas gegeben. Das Fräsgut wurde mit 500 ml einer Wasserstoffperoxidlösung à 3% versetzt. Das Becherglas wurde in einem Wasserbad auf 60 bis 65 °C aufgeheizt. Dabei bildeten sich Blasen, welche das Bitumen an die Oberfläche getragen haben, wo sich ein Schaum gebildet hat. Bei einer Erhöhung auf eine Temperatur von 80 °C war das Verfahren effizienter, bei 95 °C verlief die Trennung während 10 Minuten unter sehr guten Bedingungen, womit eine gute Trennung des bituminösen Materials von der Matrix erreicht wurde.

In einem dritten Versuch wurden 6.8 kg Fräsgut eines Strassenbelags gebrochen und in einen Behälter gegeben. Das Fräsgut wurde mit Wasser überdeckt. Anschliessend wurde das Gemisch auf 60 °C erhitzt und 100 ml Wasserstoffperoxidlösung à 35 % wurden zugegeben. Das Gemisch wurde gerührt und der Schaum wurde in regelmässigen Abständen abgeschöpft. Nach vier Stunden Abschöpfen und Zugeben von Wasserstoffperoxid (alle 30 Minuten) wurde der Prozess abgebrochen. Die Matrix konnte nahezu vollständig von bituminösem Material befreit werden. Die Matrix wog 4.1 kg und das bituminöse Material wog 1.6 kg. Feine Rückstände im Wasser machten den Rest des Fräsgutes aus. Da der Strassenbelag lediglich rund 6 % bituminöses Material umfasst, sind in den 1.6 kg lediglich rund 400 g bituminöses Material, der Rest dürften Filler, Staub, Bruchstücke etc. sein. Die grosse Menge an feinem Material ist auf das Brechen des Fräsgutes zurück zu führen.

In einem vierten Versuch wurde ein Block à 3.8 kg Fräsgut eines Strassenbelags eingesetzt. Dieser wurde in Stücke von 40 bis 80 mm Durchmesser gebrochen. Die Bruchstücke wurden in einem Behälter mit Wasser bedeckt und auf eine Temperatur von 60 °C aufgeheizt. Während 2,5 Stunden wurden kontinuierlich 160 ml Wasserstoffperoxidlösung à 35% zugegeben. Die Konglomerate wurden in ein paar Minuten disaggregiert. Der Schaum wurde regelmässig abgeschöpft. Das Gemisch wurde aufgekocht. Die verbleibende Matrix war bitumenfrei und wog 2.9 kg. Das bituminöse Material wog 0.7 kg, wobei der Filler 165 g ausmachte. Die theoretische Menge an bituminösem Material beträgt 230 g, womit Filler und Staub 228 g ausmachen - rund 6 % der ursprünglichen Menge Fräsgut.

Diese Experimente haben gezeigt, dass der Brechvorgang den Nachteil aufweisen kann, dass sich Staub im bituminösen Material anreichert. Dadurch, dass Bruchstücke von Strassenbelägen direkt eingesetzt werden, kann somit bituminöses Material mit grösserer Reinheit gewonnen werden.

In einem fünften Versuch wurde einerseits die Dichte von Wasser erhöht, um den Auftrieb des bituminösen Materials im Wasser zu erhöhen. Bituminöses Material in Strassenbelägen weist typischerweise eine höhere Dichte auf als Wasser, namentlich zwischen 1.01 und 1.05 kg/L. Somit besteht die Gefahr, dass das bituminöse Material nach dem Ablösen aus der Matrix sich am Boden des Behälters sammelt. Durch die Zugabe eines die Dichte erhöhenden Salzes oder einer die Dichte erhöhenden Flüssigkeit, kann diesem Effekt entgegen gewirkt werden. Als Salze können Natriumchlorid, Magnesiumchlorid, Kaliumchlorid, Natriumcarbonat oder Natriumnitrat vorgesehen sein. Als Flüssigkeit kommt zum Beispiel Glycerin oder dergleichen in Frage. Die Trennung kann auch in reinem Glycerin erfolgen.

In einem sechsten Versuch wurden 5 kg Fräsgut eines Strassenbelags eingesetzt und mit 7.5 L Wasser ohne Kochsalz versetzt. Das Gemisch wurde auf 95 °C erhitzt und mit einem Schaufelmischer gerührt. Anschliessend wurden alle 15 Minuten jeweils 100 g Natriumbicarbonat in Pulverform zugegeben. Nach 6 Zugaben und 2 Stunden Reaktionszeit wurden 1.3 kg bituminöses Material an der Wasseroberfläche gewonnen. Die 3.7 kg Matrix wurde grösstenteils vom bituminösen Material getrennt. Das Wasser enthielt Schwebstoffe.

Diese Experimente zeigen, dass das Verfahren mit verschiedenen Substanzen (Bicarbonate, Essigsäure, Peroxyde, Percarbonate, etc.) durchgeführt werden kann.

In einem siebten Versuch wurden 5 kg Fräsgut mit 5 Litern Wasser vermengt und mit einem leistungsstarken Mischer zwei Stunden lang gerieben (Abriebverfahren, siehe oben).

Nach zwei Stunden wurde der Splitt (Kies) untersucht. Der Splitt enthielt etwas Bitumen in den konkaven Bereichen. Der Abrieb enthält den grossen Teil Bitumen.

Nun wurden in 600 ml des obigen Restwassers, das Filler und Sand mit bituminösem Material enthielt, rund 10 gew.% CaCl₂ gelöst und mit 1 ml 35 gew.% H₂O₂ versetzt und erhitzt. Ein bituminöser Rückstand wurde extrahiert und der Sand und der Filler wurden dekantiert. Nach 24 Stunden stellte dieser Teil 180 ml dar und enthielt kein Bitumen mehr. 200 g Splitt, das ein wenig Bitumen enthielt, wurden wiederum in 600 ml Wasser mit 1 ml H₂O₂ behandelt und erhitzt. Nach der Behandlung war der Splitt von Bitumen gereinigt.

In einem weiteren Versuch wurden 400 ml des obigen Restwassers, das Filler und Sand mit bituminösem Material enthielt, mit 300 ml Wasser versetzt und in einem Mixer (welche auch zum Mixen von Smoothies eingesetzt werden) gemixt. Durch das Mixen werden viele Luftblasen in der Suspension erzeugt, welche das bituminöse Material in der Form eines Schaums an die Oberfläche tragen. Sand und Filler sedimentieren hingegen aufgrund der höheren Dichte. Das Verfahren funktioniert ohne chemische Zusätze und auch ohne Zusätze zur Erhöhung der Dichte des Wassers.

Diese Varianten zeigen, dass es möglich ist, verschiedene Techniken (abreiben, fraktionieren usw.) zu kombinieren, um den besten Wirkungsgrad (Effizienz, Reinheit etc.) zu erzielen.

In einem achten Versuch wurden ungefähr 80 kg Fräsgut in 200 L Wasser bei 90 °C erhitzt und gemischt. Während des Verfahrens wurden 10 ml/min H₂O₂ durch eine Pumpe injiziert. Um die Dichte des Wassers zu erhöhen, wurden 25 kg Natriumcarbonat zugegeben. Nach zwei Stunden Reaktion wurden 10 kg bituminöser Rückstand und 70 kg Mineralstoff gesammelt. Damit wurde gezeigt, dass die Reinigung auch ohne Chloridsalz durchgeführt werden kann.

In einem neunten Versuch wurden 10 kg Fräsgut in 20 L Wasser und mit Natriumbicarbonat erhitzt. Das bituminöse Material stieg an die Oberfläche, fiel aber wieder ab, da der Dichteunterschied nicht ausreichte, um das bituminöse Material auf der Wasseroberfläche zu halten. Um die Rückstände auf der Wasseroberfläche wiederzugewinnen, wurde ein Kohlendioxidstrom (CO₂) am Behälterboden eingeleitet, wodurch das bituminöse Material zur Oberfläche konvektionierte, wo es gesammelt werden konnte. Dieses Experiment zeigt, dass es möglich ist, die bituminösen Rückstände auf der Flüssigkeitsoberfläche zu sammeln, ohne die Dichte des Wassers mit Salz oder Zucker zu erhöhen.

In einem zehnten Versuch wurde das getrocknete bituminöse Material nachbearbeitet, um das Bitumen von dem Filler und dem Sand zu extrahieren. In der Tat kann der bituminöse Rückstand 25 gew.% bis 33 gew.% Bitumen enthalten, während der Rest kleine Mineralpartikel umfasst. Das bituminöse Material wurde in einem Behälter mit Wasser gegeben und durch starkes Mischen mit einem Mischer nachbearbeitet. Damit trennte sich das Bitumen von dem Fillern und dem Sand. Durch die Zugabe von Salz zum Wasser schwamm das Bitumen auf der Oberfläche auf während der mineralische Teil sedimentierte. Dadurch konnte das Bitumen aufkonzentriert werden.

Bei den Strassenbelägen haftet das bituminöse Material gewollt besonders stark an den Fillern, an dem Sand und Splitt. Eine Schichtdicke kann mehrere hundert Mikrometer erreichen. Dadurch wird im Verfahren das bituminöse Material Schicht um Schicht von der Matrix abgetragen. Dies wiederum hat zur Folge, dass eine schnelle Zugabe eines reaktiven Stoffes, insbesondere eines Trennungsmittels, zum Beispiel ein Peroxid, folgende Nachteile aufweisen kann:
- eine zu heftige Reaktion wird ausgelöst, womit eine grosse Menge Schaum erzeugt wird. Mit den Gasblasen wird damit nicht nur das bituminöse Material, sondern auch viel Sand und Filler nach oben, in den Schaum getragen;
- das Peroxid kann auch mit bereits getrenntem bituminösem Material reagieren, womit das bituminöse Material oxidiert wird. Damit wird das Peroxid ineffizient eingesetzt.

Diese Probleme können mit zwei Massnahmen angegangen werden. Einerseits kann das Peroxid dosiert zugegeben werden, so dass jeweils eine geringe Konzentration vorliegt. Weiter ist es von Vorteil, wenn das Peroxid im Bereich des Sekundärrohstoffes, d. h. im Bereich des Bodens des Behälters zugeführt wird. Dies kann zum Beispiel über ein Tauchrohr erfolgen.

In diesem fünften Versuch wurden 280 kg Fräsgut eines Strassenbelags eingesetzt und mit 250 L Wasser und 25 kg Kochsalz versetzt. Das Gemisch wurde auf 60 °C erhitzt und mit einem Schaufelmischer gerührt. Anschliessend wurden über ein Tauchrohr jeweils nach 10 Minuten 100 ml Wasserstoffperoxidlösung à 35 % zugegeben. Alternativ kann die Zugabe auch über eine Pumpe kontinuierlich erfolgen. Nach 14 Zugaben von 100 ml Wasserstoffperoxidlösung à 35 % und 2 Stunden Reaktionszeit sowie 1 Stunde Materialsammlung wurden 45 kg bituminöses Material an der Wasseroberfläche gewonnen. Die Matrix wurde grösstenteils vom bituminösen Material getrennt. Das Salzwasser enthielt Schwebstoffe.

Die Funktionsweise ist nicht vollständig geklärt. Es ist möglich, dass durch das Einbringen der Peroxidlösung ein relativ saurer pH erreicht wird, womit sich Kalkrückstände auflösen und Bikarbonat freigesetzt wird. Das Bikarbonat wirkt wiederum zusammen mit Peroxid als starkes Reinigungsmittel, womit wiederum das bituminöse Material effektiv von der Matrix getrennt werden kann.

In einem weiteren bevorzugten Verfahren wird durch die Verwendung von Katalysatoren die Bildung von Gasblasen beschleunigt, womit die Temperatur des Gemischs im Behälter niedriger gehalten werden kann. Damit kann einerseits die Aufheizzeit und anderseits die Heizenergie eingespart werden. Damit wird ein besonders effizientes und kostengünstiges Trennverfahren erreicht.

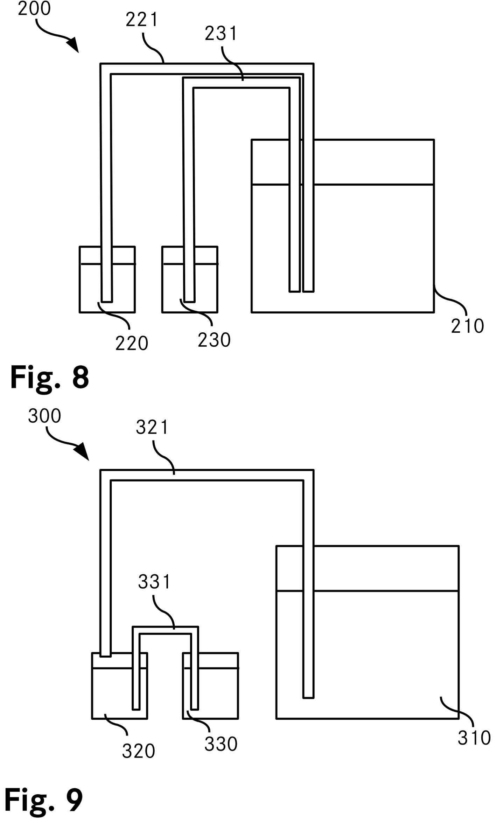

Die Figur 8 zeigt eine schematische Darstellung einer ersten Ausführungsform einer Vorrichtung 200 zur Durchführung des Verfahrens mit einer Einrichtung zur Erzeugung von Gasblasen. Die Vorrichtung 200 umfasst einen Behälter 210, in welchem das Fräsgut mit dem Wasser gemischt wird. Weiter umfasst die Vorrichtung 200 einen ersten Dosierbehälter 220, in welchem vorliegend Wasserstoffperoxid (alternativ können auch andere Stoffe, insbesondere andere Peroxide, Carbonate oder Bicarbonate etc. vorgesehen sein) in wässriger Lösung vorgelegt ist. Über eine Leitung 221 wird die Lösung dem Behälter 210 zudosiert. In einem zweiten Dosierbehälter 230 ist ein Katalysator, vorliegend Eisen-III-chlorid in wässriger Lösung vorgelegt. Diese Katalysatorlösung wird über eine separate Leitung 231 dem Behälter 210 zudosiert. Die Dosierung der Lösungen erfolgt jeweils über eine nicht dargestellte Pumpe. Die Leitungen 221 und 231 münden nebeneinander unter Niveau im Behälter 210, so dass direkt nach dem Austritt der Katalysatorlösung und der Wasserstoffperoxidlösung eine Zersetzungsreaktion stattfindet, womit Gasblasen erzeugt werden, welche das Bitumen an die Oberfläche bringen. Die beiden Leitungen 221 und 231 können zur besseren Durchmischung in einem statischen Mischer oder dergleichen münden. Im Behälter 210 ist weiter ein (nicht dargestellter) Schaufelmischer vorgesehen, um das Fräsgut während des Verfahrens umzuwälzen.

In einer weiteren Ausführungsform wird der Katalysator direkt im Behälter mit dem Wasser gemischt, womit auf die Leitung 231 auch verzichtet werden kann.

Die Materialien (Fräsgut, Katalysator etc.), welche im Wasser suspendiert oder gelöst werden, können mit unterschiedlichen technischen Einrichtungen eingebracht werden, zum Beispiel mit Abstreifer, Vibrator, schiefe Ebene, Mischer, schräge rotierende Trommel, Förderband, Förderschnecke usw.

In einer weiteren Ausführungsform des Verfahrens wird statt der Katalysatorlösung über die Leitung 231 Heissdampf in den lokalen Bereich der Austrittsöffnung der Leitung 221 geführt. Damit kann eine gasblasen erzeugende Substanz, zum Beispiel das Peroxid, lokal erhitzt werden, um die Zersetzung zu beschleunigen.

In einer weiteren Ausführungsform wird eine Katalysatorlösung erhitzt, womit die Zersetzungsreaktion gleichzeitig durch Wärme und den Katalysator beschleunig wird. Diese Ausführungsform kann bei typischerweise reaktionsträgeren Substanzen zur Anwendung kommen.

Während in der ersten Ausführungsform die beiden Leitungen 221 und 231 parallel geführt sind, können diese in einer weiteren Ausführungsform auch koaxial, als Innenrohr und Aussenrohr, ausgebildet sein. Weiter können die Rohrleitungen - ob parallel oder koaxial geführt - auch von einer Aussenseite des Behälters 210 an Öffnungen des Behälterbodens angeschlossen sein. Dies kann von Vorteil sein, da damit ein Rührvorgang im Behälter 210 nicht durch Leitungen behindern wird. Weiter können die Leitungen auch in einem gemeinsamen Endrohr münden.

Die Figur 9 zeigt eine schematische Darstellung einer zweiten Ausführungsform einer Vorrichtung zur Durchführung des Verfahrens mit einem separaten Reaktor zur Erzeugung von Gasblasen. Die Vorrichtung umfasst wiederum einen Behälter 310, in welchem das bituminöse Material, vorliegend bituminöses Fräsgut, mit Wasser vermengt ist. In einem ersten Dosierbehälter 320 wird Wasserstoffperoxid in einer wässrigen Lösung vorgelegt und in einem zweiten Dosierbehälter 330 ist eine Katalysatorlösung, vorliegend Eisen-III-Chlorid vorgelegt. Der zweite Dosierbehälter 330 ist über eine Leitung 331 mit dem ersten Dosierbehälter 320 verbunden. Damit kann über eine nicht dargestellte Dosiereinheit die Katalysatorlösung vom zweiten Dosierbehälter 330 in den ersten Dosierbehälter 320 dosiert werden. Im ersten Dosierbehälter 320 erfolgt damit eine katalytisch beschleunigte Zersetzung des Wasserstoffperoxids, womit sich Sauerstoff bildet. Dieser wird über die Leitung 321 vom ersten Dosierbehälter 320, unter Niveau in den Behälter 310 überführt. Statt einer katalytischen Zersetzung im ersten Dosierbehälter 320, kann die Zersetzung im ersten Dosierbehälter 320 auch durch Erhitzen beschleunigt werden.

In einem ersten Versuch werden 30 kg Fräsgut in einen Behälter mit einem Rührwerk mit 40 L Wasser bei 18°C gegeben. 4 kg Na₂CO₃ werden hinzugefügt, um eine ausreichende Dichte zu erhalten, damit das Bitumen-Extrakt nach der Abtrennung auf dem Wasser aufschwimmt. Zwei Rohre werden parallel angeschlossen, um eine 35 %ige H₂O₂-Lösung und eine 40 %ige FeCl₃-Lösung mit einer Durchflussrate von 100 Mikroliter/Minute zu dosieren. Die Mischung der beiden Reagenzien erzeugt bereits bei niedriger Temperatur Gasblasen, die durch die Zersetzung des Peroxids entstehen. Nach zwei Stunden wird ein mehrere Kilogramm schweres, bituminöses Extrakt gesammelt und in Pulverform getrocknet. Das verbleibende Material besteht aus Sand und Kieselsteinen, die von ihrem Bitumen gereinigt werden. Weiter ist ein brauner Rückstand aus oxidiertem Eisen sichtbar, dies lässt sich aber leicht ausspülen. Die Wassertemperatur steigt während der Reaktion aufgrund der endothermen Natur der Peroxidzersetzung lediglich auf rund 22 °C an.

In einem weiteren Experiment wurde die Peroxidzersetzung durch lokales Erhitzen beschleunigt:
Rund 30 kg Fräsgut werden in einen Reaktor mit einem Rührwerk mit 40 L Wasser bei 15°C vermengt. 4 kg Na₂CO₃ werden hinzugefügt, um eine ausreichende Dichte zu erhalten, damit der Bitumen-Extrakt nach der Abtrennung auf dem Wasser schwimmt. Es werden zwei Rohre ineinander gesteckt. Mit dem Innenrohr wird eine 35 %ige H₂O₂-Lösung mit einer Durchflussrate von 100 Mikroliter/Minute dem Reaktor zudosiert. Zwischen dem Innenrohr und dem Aussenrohr wird kochendes Wasser zudosiert. Beim Austritt in den Reaktor erzeugt die Mischung aus Wasserstoffperoxid und heissem Wasser Gasblasen mit hoher Temperatur. Nach zwei Stunden wird ein mehrere kg schwerer, bituminöser Extrakt gesammelt und in Pulverform getrocknet. Das restliche Material besteht aus Sand und Kieselsteinen, die von ihrem Bitumen gereinigt wurden.

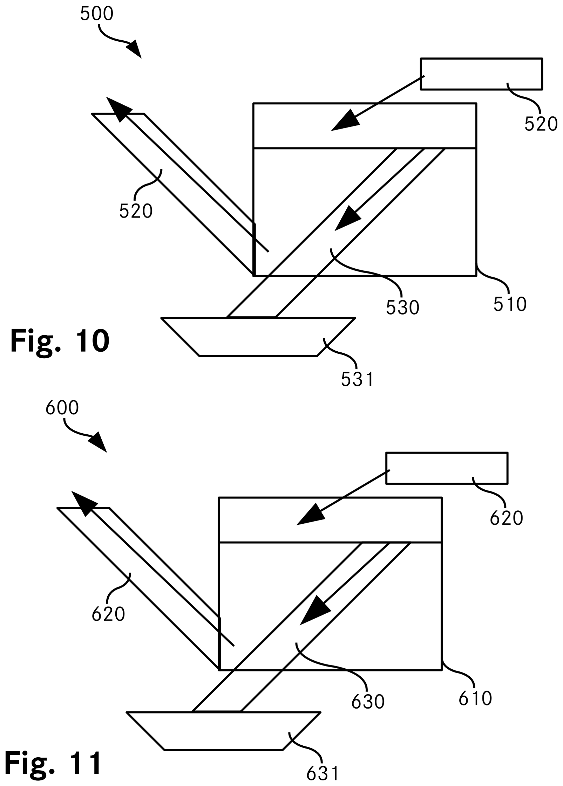

Die Figur 10 zeigt eine schematische Darstellung einer dritten Ausführungsform einer Vorrichtung zur Durchführung des Verfahrens, bei welcher das Bitumen an der Flüssigkeitsoberfläche abgeschöpft wird.

Bei hohen Temperaturen (typischerweise über 35 °C) schwimmt das Bitumen nach der Abtrennung auf dem Wasser auf und kann durch Abschöpfen abgetrennt werden. Bei niedrigen Temperaturen fällt das Bitumen grundsätzlich aus und sinkt auf den Boden des Reaktors. Unterhalb von 35 °C weist das Bitumen eine Dichte von ungefähr 1.03 t/m³ auf. Um ein hinreichend effizientes Abtrennen des Bitumens über die Flüssigkeitsoberfläche zu erreichen, sollte die Dichte der Flüssigkeit zum Beispiel 1.045 t/m³ betragen. Um nun auch bei geringen Temperaturen ein Aufschwimmen des Bitumens an der Oberfläche des Wassers zu erreichen, kann die Dichte des Wassers durch Zusatzstoffe wie Salz, Zucker, Schwebstoffe, Schlamm etc. auf oder über diesen Wert erhöht werden. Dies kann zum Beispiel durch eine Zugabe von mindestens 5% Na₂CO₃ erreicht werden. Da gleichzeitig der Sand und Kies eine höhere Dichte aufweist, kann das Bitumen damit bei tiefer Temperatur effektiv vom Sand und Kies abgetrennt werden und einfach an der Wasseroberfläche abgeschöpft werden.

Die Figur 10 zeigt eine Vorrichtung 500, mit welcher dieses Verfahren durchgeführt werden kann. Das Fräsgut wird mit einem Förderband 520 in den Reaktor 510 eingetragen. Im Reaktor 510 befindet sich eine wässrige Lösung mit 5% Na₂CO₃. Die Prozesstemperatur beträgt vorliegend 20 °C. Damit weist das Bitumen im Fräsgut eine geringere Dichte auf, als die Flüssigkeit und schwimmt damit nach der Abtrennung vom Sand/Kies auf der Flüssigkeit. Das Verfahren kann, wie oben beschrieben, durch Flotation unterstützt werden. Je nach Intensität der Flotation kann auf die Erhöhung der Dichte auch verzichtet werden. Über eine Leitung 530 wird der sich am Reaktorboden absetzende Sand und Filler aus dem Reaktor 510 ausgetragen.

Die Figur 11 zeigt eine schematische Darstellung einer vierten Ausführungsform einer Vorrichtung zur Durchführung des Verfahrens, wobei das Bitumen am Behälterboden gesammelt und ausgetragen wird.

Wenn die Reaktion in kaltem Wasser (unter 35°C) durchgeführt wird, kann auch auf die Erhöhung der Dichte der Flüssigkeit verzichtet werden. Das Bitumen kann in diesem Fall zusammen mit den Mineralien (Sand, Kies) auf den Boden des Reaktors 610 sinken. Der Sand und Kies kann mit einer mineralienspezifischen Schnecke 620 entfernt werden. Der Filler kann mit dem Reagenzienschaum über eine Leitung 630 ausgeschwemmt werden. Der bituminöse Rückstand kann am Ende des Trennverfahrens oder durch ein spezielles mechanisches Mittel (z. B. Kettenräumer) aus dem Reaktor 610 ausgetragen werden.

In einer weiteren Variante wird das abgetrennte Bitumen, zum Beispiel durch ein Einstellen der Dichte oder ein geeignetes Rührverfahren, in Suspension gehalten. Während des Verfahrens wird nun die Flüssigkeit mit dem suspendierten Bitumen abgepumpt und in einem separaten Behälter von der Flüssigkeit abgetrennt, zum Beispiel durch Abdekantieren. Die abgetrennte Flüssigkeit kann dem Reaktor wieder zugeführt werden. Damit kann das Bitumen in einem kontinuierlichen Prozess der Flüssigkeit entnommen werden. Sand/Kies und der Filler können ebenfalls kontinuierlich aus der Flüssigkeit entfernt werden, zum Beispiel über eine mineralienspezifische Förderschnecke. Damit kann das gesamte Verfahren kontinuierlich durchgeführt werden.

In einem weiteren Experiment wurden 3 Tonnen Sande, die mit Kohlenwasserstoffen (C10-C40 (Anzahl Kohlestoffatome pro Molekül); 320 mg/kg) und organischem Gesamtkohlenstoff (TOC: 8100 mg/kg) verunreinigt waren, wurden in einem 9000-Liter-Tank behandelt, der mit Wasser bei 80 °C gefüllt und mit einem Rührwerk ausgestattet war; 25 L Peroxid 35% wurden unter dem Wasserspiegel zugegeben und das Ganze wurde 15 Minuten lang gemischt. Nach einigen Minuten war bereits ein Schaum auf dem Wasserspiegel zu sehen, der feines Material enthielt und aus dem Tank überlief und aufgefangen wurde.

Nach dem Versuch wurden der im Tank verbliebene Sand und das aus dem Tank übergelaufene Feinmaterial analysiert:
- Die Sande enthielten eine Kohlenwasserstoffkonzentration von 170 mg/kg (C10-C40) und einen TOC-Wert von weniger als 5'000 mg/kg;
- Das Feinmaterial, das als Schaum ausgetragen wurde, enthielt angereicherte Kohlenwasserstoffe mit 5'400 mg/kg und einen TOC-Wert von 110'000 *mg*/*kg.*

Die Analysen zeigen, dass die Aufbereitung funktioniert und die Verunreinigung unter den oben genannten Bedingungen um den Faktor 2 reduziert, so dass diese Sande für den Einsatz im Bauwesen geeignet sind.

Dies zeigt, dass das Verfahren die Schadstoffe im feinen Material, das als Schaum austritt, aufkonzentriert und die Schadstoffe auf dem Sand deutlich reduziert oder eliminiert.

Versuche im kleinen Massstab haben zudem gezeigt, dass auch PAK-belastete Böden mit dem Verfahren der vorliegenden Erfindung gereinigt werden können. PAK-belastete Böden können von Strassenrändern stammen, aber auch von Staubniederschlägen aus industriellen Prozessen, wie z. B. von verschmutzten Standorten in der Nähe von Aluminiumwerken, die in der Vergangenheit nach dem Sörderberg-Verfahren betrieben wurden.

In einer Nachbehandlung können die Materialien (Sand, Kies, Bitumen etc.) gespült werden, um diese von Rückständen der Zusatzstoffe (z.B. Kochsalz, Eisenchlorid, Peroxid etc.) zu befreien. Das Bitumen kann entwässert, insbesondere zum Beispiel gepresst, verdichtet, erhitzt werden.

Zusammenfassend ist festzustellen, dass erfindungsgemäss ein Verfahren zum Trennen von bituminösem Material aus einem Sekundärrohstoff geschaffen wird, welches besonders effektiv und mit geringem Aufwand durchgeführt werden kann.

Die folgenden bevorzugten Ausführungsformen der Erfindung werden ebenfalls offenbart:
1. Verfahren zum Aufbereiten von bitumenhaltigem Strassenbelagsmaterial aus einem Strassenabbruch, wobei das bitumenhaltige Strassenbelagsmaterial in der Form von Abbruchmaterial und/oder Fräsgut vorliegt, wobei die folgenden Schritte ausgeführt werden:
   - Vermengen des bitumenhaltigen Strassenbelagsmaterial mit Wasser zu einem Gemisch;
   - Zugeben eines Peroxids und/oder eines Bicarbonats zum Wasser und/oder dem Gemisch, insbesondere Wasserstoffperoxid und/oder ein Bicarbonat.
2. Verfahren nach Ausführungsform 1, dadurch gekennzeichnet, dass die Zugabe des Wasserstoffperoxids und/oder des Bicarbonats derart gesteuert wird, dass Konglomerate des bitumenhaltigen Strassenbelagmaterials disaggregiert werden.
3. Verfahren nach Ausführungsform 1 oder 2, dadurch gekennzeichnet, dass die Zugabe des Wasserstoffperoxids und/oder des Bicarbonats unter Niveau erfolgt.
4. Verfahren nach einem der Ausführungsformem 1 bis 3, dadurch gekennzeichnet, dass das bitumenhaltige Strassenbelagsmaterial unverarbeitet, direkt mit Wasser zu einem Gemisch vermengt wird.
5. Verfahren nach einem der Ausführungsformen 1 bis 4, dadurch gekennzeichnet, dass das Gemisch erhitzt wird, insbesondere auf eine Temperatur von über 50°C, vorzugsweise über 60°C..
6. Verfahren nach einem der Ausführungsformen 1 bis 5, dadurch gekennzeichnet, dass das Gemisch mechanisch bearbeitet wird.
7. Verfahren nach einem der Ausführungsformen 1 bis 6, dadurch gekennzeichnet, dass das bitumenhaltige Strassenbelagsmaterial Splitt, Sand, Filler und bituminöses Material umfasst, wobei das Verfahren solange durchgeführt wird, bis mindestens 80%, vorzugsweise mindestens 90% besonders bevorzugt mindestens 95% des Splitt aus dem bitumenhaltigen Strassenbelagsmaterial abgetrennt ist.
8. Verfahren nach einem der Ausführungsformen 1 bis 7, dadurch gekennzeichnet, dass das Verfahren solange durchgeführt wird, bis eine an dem Splitt, vorzugsweise an dem Splitt, Sand und Filler anhaftende Restmenge an bituminösem Material weniger als 3 gew.%, vorzugsweise weniger als 1 gew.%, insbesondere bevorzugt weniger als 0.3 gew.% beträgt.
9. Verfahren nach einem der Ausführungsformen 1 bis 8, dadurch gekennzeichnet, dass das bituminöse Material an einer Flüssigkeitsoberfläche des Gemischs, insbesondere mittels Flotation, gesammelt wird.
10. Verfahren nach einem der Ausführungsformen 1 bis 9, dadurch gekennzeichnet, dass das bitumenhaltige Strassenbelagsmaterial zumindest teilweise bituminöses Material mit einem Penetrationswert von weniger als 25, vorzugsweise weniger als 20, insbesondere weniger als 15 umfasst.
11. Verfahren nach einem der Ausführungsformen 1 bis 10, dadurch gekennzeichnet, dass mindestens 30 gew.%, vorzugsweise mindestens 50 gew.%, insbesondere mindestens 75 gew.% des bitumenhaltigen Strassenbelagmaterials beim Vermengen mit dem Wasser eine Konglomeratgrösse von mehr als 5 cm aufweist.
12. Verfahren nach einem der Ausführungsformen 1 bis **11,** dadurch gekennzeichnet, dass ein Dichteunterschied zwischen dem an der Oberfläche auftreibenden bituminösen Material und dem Gemisch durch Zugabe mindestens einer die Dichte beeinflussenden ersten Substanz vergrössert wird, wobei die erste Substanz insbesondere eine Lauge, eine Säuren, ein Salz und/oder Bestandteile aus Strassenbelagsmaterial umfasst.
13. Verfahren nach einem der Ausführungsformen 1 bis 12, dadurch gekennzeichnet, dass das bitumenhaltige Strassenbelagsmaterial Bindemittel zum Erreichen einer Verbindung zwischen bitumenhaltigem Material und Kies umfasst, wobei die Bindemittel insbesondere Polymere, vorzugsweise Styrol-Butadien-Styrol und/oder Amidester umfasst.
14. Verfahren nach einem der Ausführungsformen 1 bis 13, dadurch gekennzeichnet, dass eine Haftung zwischen dem bituminösen Material und dem Kies des bitumenhaltigem Strassenbelagsmaterial zwischen 70% und 80% liegt.
15. Verfahren nach einem der Ausführungsformen 1 bis 14, dadurch gekennzeichnet, dass ein Anteil an VOC im bituminösen Material kleiner als 1 gew.%, vorzugsweise kleiner als 0.5 gew.%, insbesondere bevorzugt kleiner als 0.1 gew.% ist.
16. Verwendung des Verfahrens nach einem der Ausführungsformen 1 bis 15 zur Entfernung von Polyzyklischen aromatischen Kohlenwasserstoffen, sowie vorzugsweise Fasern, Basalt und/oder Aramid, aus bitumenhaltigem Strassenbelagsmaterial.

## Patentansprüche

1. Verfahren zum Aufbereiten von bitumenhaltigem Strassenbelagsmaterial aus einem Strassenabbruch, wobei das bitumenhaltige Strassenbelagsmaterial in der Form von Abbruchmaterial und/oder Fräsgut vorliegt, wobei die folgenden Schritte ausgeführt werden:
- Vermengen des bitumenhaltigen Strassenbelagsmaterial mit Wasser zu einem Gemisch;
- Zugeben eines Peroxids und/oder eines Bicarbonats zum Wasser und/oder dem Gemisch, insbesondere Wasserstoffperoxid und/oder ein Bicarbonat, wobei
- die Zugabe des Wasserstoffperoxids und/oder des Bicarbonats unter Niveau erfolgt; und wobei
- das bituminöse Material an einer Flüssigkeitsoberfläche des Gemischs, insbesondere mittels Flotation, gesammelt wird.

2. Verfahren nach Anspruch 1, **dadurch gekennzeichnet, dass** die Zugabe des Wasserstoffperoxids und/oder des Bicarbonats derart gesteuert wird, dass Konglomerate des bitumenhaltigen Strassenbelagmaterials disaggregiert werden.

3. Verfahren nach Anspruch 1 oder 2, **dadurch gekennzeichnet, dass** das bitumenhaltige Strassenbelagsmaterial unverarbeitet, direkt mit Wasser zu einem Gemisch vermengt wird.

4. Verfahren nach einem der Ansprüche 1 bis 3, **dadurch gekennzeichnet, dass** das Gemisch erhitzt wird, insbesondere auf eine Temperatur von über 50°C, vorzugsweise über 60°C.

5. Verfahren nach einem der Ansprüche 1 bis 4, **dadurch gekennzeichnet, dass** das Gemisch mechanisch bearbeitet wird.

6. Verfahren nach einem der Ansprüche 1 bis 5, **dadurch gekennzeichnet, dass** das bitumenhaltige Strassenbelagsmaterial Splitt, Sand, Filler und bituminöses Material umfasst, wobei das Verfahren solange durchgeführt wird, bis mindestens 80%, vorzugsweise mindestens 90% besonders bevorzugt mindestens 95% des Splitt aus dem bitumenhaltigen Strassenbelagsmaterial abgetrennt ist.

7. Verfahren nach einem der Ansprüche 1 bis 6, **dadurch gekennzeichnet, dass** das Verfahren solange durchgeführt wird, bis eine an dem Splitt, vorzugsweise an dem Splitt, Sand und Filler anhaftende Restmenge an bituminösem Material weniger als 3 gew.%, vorzugsweise weniger als 1 gew.%, insbesondere bevorzugt weniger als 0.3 gew.% beträgt.

8. Verfahren nach einem der Ansprüche 1 bis 7, **dadurch gekennzeichnet, dass** das bitumenhaltige Strassenbelagsmaterial zumindest teilweise bituminöses Material mit einem Penetrationswert von weniger als 25, vorzugsweise weniger als 20, insbesondere weniger als 15 umfasst.

9. Verfahren nach einem der Ansprüche 1 bis 8, **dadurch gekennzeichnet, dass** mindestens 30 gew.%, vorzugsweise mindestens 50 gew.%, insbesondere mindestens 75 gew.% des bitumenhaltigen Strassenbelagmaterials beim Vermengen mit dem Wasser eine Konglomeratgrösse von mehr als 5 cm aufweist.

10. Verfahren nach einem der Ansprüche 1 bis 9, **dadurch gekennzeichnet, dass** ein Dichteunterschied zwischen dem an der Oberfläche auftreibenden bituminösen Material und dem Gemisch durch Zugabe mindestens einer die Dichte beeinflussenden ersten Substanz vergrössert wird, wobei die erste Substanz insbesondere eine Lauge, eine Säuren, ein Salz und/oder Bestandteile aus Strassenbelagsmaterial umfasst.

11. Verfahren nach einem der Ansprüche 1 bis 10, **dadurch gekennzeichnet, dass** das bitumenhaltige Strassenbelagsmaterial Bindemittel zum Erreichen einer Verbindung zwischen bitumenhaltigem Material und Kies umfasst, wobei die Bindemittel insbesondere Polymere, vorzugsweise Styrol-Butadien-Styrol und/oder Amidester umfasst.

12. Verfahren nach einem der Ansprüche 1 bis **11, dadurch gekennzeichnet, dass** eine Haftung zwischen dem bituminösen Material und dem Kies des bitumenhaltigem Strassenbelagsmaterial zwischen 70% und 80% liegt.

13. Verfahren nach einem der Ansprüche 1 bis 12, **dadurch gekennzeichnet, dass** ein Anteil an VOC im bituminösen Material kleiner als 1 gew.%, vorzugsweise kleiner als 0.5 gew.%, insbesondere bevorzugt kleiner als 0.1 gew.% ist.

14. Verwendung des Verfahrens nach einem der Ansprüche 1 bis 13 zur Entfernung von Polyzyklischen aromatischen Kohlenwasserstoffen, sowie vorzugsweise Fasern, Basalt und/oder Aramid, aus bitumenhaltigem Strassenbelagsmaterial.
